# EUROPÄISCHE PATENTSCHRIFT

(11) **EP 3 219 019 B1**
(45) Veröffentlichungstag und Bekanntmachung des Hinweises auf die Patenterteilung: **15.05.2019**
(21) Anmeldenummer: 15781625.7
(22) Anmeldetag: 13.10.2015
(51) Int. Cl.: H04B 5/00, H04B 7/04, H04B 7/0408, H04B 17/27, H04W 64/00, G06K 7/10, G06K 19/07, G06K 19/077, H01Q 1/22, H01Q 3/26

(54) **ANTENNENVORRICHTUNG, FUNKERKENNUNGSSYSTEM UND VERFAHREN ZUM AUSSENDEN EINES FUNKSIGNALS**
ANTENNA DEVICE, RADIODETECTION SYSTEM AND METHOD FOR EMITTING A RADIO SIGNAL
DISPOSITIF D'ANTENNES, SYSTÈME DE DÉTECTION ET METHODE POUR ÉMETTRE UN SIGNAL RADIO

(30) Priorität: 14.11.2014 DE 102014223328
(43) Veröffentlichungstag der Anmeldung: 20.09.2017
(73) Patentinhaber: Fraunhofer Gesellschaft zur Förderung der angewandten Forschung E.V., 80686 München (DE)
(72) Erfinder: WEISGERBER, Lars, 02727 Ebersbach-Neugersdorf (DE); STRAUSS, Wolfram, 90429 Nürnberg (DE); SCHÜHLER, Mario, 91090 Effeltrich (DE); POPUGAEV, Alexander, 91052 Erlangen (DE); WANSCH, Rainer, 91083 Baiersdorf (DE); BERNHARD, Josef, 92507 Nabburg (DE)
(74) Vertreter: Zimmermann, Tankred Klaus
(86) Internationale Anmeldenummer: PCT/EP2015/073663
(87) Internationale Veröffentlichungsnummer: WO 2016/074875

(56) Entgegenhaltungen:
- WO-A1-2008/067972
- WO-A1-2014/057167
- DE-A1- 10 257 757
- GB-A- 2 496 821
- US-A1- 2002 085 643
- US-A1- 2004 157 645
- US-A1- 2005 110 641
- US-A1- 2009 086 648

## Beschreibung

Die vorliegende Erfindung bezieht sich auf eine Antennenvorrichtung zum Aussenden eines Funkerkennungssignals sowie auf ein Funkerkennungssystem und ein Verfahren zum Aussenden eines Funksignals, beispielsweise ein Funkerkennungs- (Radio Frequency Identificiation - RFID-) Signal. Die vorliegende Erfindung bezieht sich ferner auf eine RFID-Antenne mit autonomer Keulenformung.

In der Logistik finden immer häufiger hochfrequente Transponder (Radio Frequency Identification - RFID Transponder) Anwendung, die eine Identifikation von Objekten erlauben. Typischerweise sind diese Transponder passiv, sie können aber auch aktiv sein. Die Transponder werden durch ein hochfrequentes elektromagnetisches Feld angeregt. Der Transponder nutzt dieses Signal und sendet als Antwort auf die Anregung ein moduliertes Signal an die Lesestation zurück. Im Antwortsignal sind dabei Informationen des Transponders enthalten, die von der Lesestation ausgewertet werden können. Damit kann ein Objekt über einen Transponder eindeutig identifiziert und zugeordnet werden.

Mit Hilfe dieser hochfrequenten Identifikation von Objekten können logistische Prozesse, wie die Identifikation von Objekten auf einer Palette, bedient und optimiert werden. Befinden sich auf einer Palette sehr viele Objekte mit einem Transponder, so können durch einen zugeschnittenen Leseprozess in gegebener Zeit alle Transponder ausgelesen und somit alle Objekte identifiziert werden. Dies ermöglicht eine automatische Erfassung von Objekten.

DE102 57 757 offenbart eine Antennenanordnung, die mit einem Computer über Funk/WLAN oder über Kabel verbunden ist. Laut DE102 57 757 werden Transponder an zu lokalisierenden Gegenständen angebracht. Durch die Identifizierung der Antenne, welche den entsprechenden Transponder ausliest, lassen sich der Ort des Transponders und damit der Ort des den Transponder tragenden Gegenstands ermitteln. Wird der Gegenstand entfernt oder bewegt, ändern sich die Transponderdaten.

WO 2014/057167 bezieht sich auf eine Antennenvorrichtung, die ein Paar von Antennenelementen für einen RFID-Leser/Schreiber aufweist, um mit einem RFID-Tag zu kommunizieren. Gemäß WO 2014/057167 ist ein Winkel von zwei Antennenelementen zueinander veränderbar. Somit ist die Relativposition der beiden Antennenelemente einstellbar. Dadurch ermittelt die Information bezüglich des Winkels, wie die beiden Antennenelemente mechanisch zueinander ausgerichtet sind.

Heutige Systeme, wie sie bei Tor-Durchfahrten bzw. Verfahreinheiten eingesetzt werden, bestehen aus einem Lesegerät mit einem bis vier Anschlüssen, an denen dann jeweils eine Antenne angeschlossen werden kann. Über diese Antenne(n) wird das hochfrequente Anregungssignal ausgesendet und die Antwortsignale der Transponder empfangen. Bei Lesestationen mit einem einzelnen Anschluss werden bisher typischerweise einzelne Antennen eingesetzt (1 Tor - 1 Einzelantenne). Die zuverlässige Erfassung sehr vieler Tags (Transponder) erfordert dabei eine längere Erfassungsdauer als bei einem Einsatz von mehreren Antennen, da viele Kollisionen zwischen den Antwortsignalen entstehen können und keine räumliche Filterung möglich ist. Des Weiteren ist der Erfassungsbereich (sog. Sicht- oder Lesebereich) deutlich geringer, gegenüber dem Einsatz mehrerer Antennen und der damit einhergehenden Tor-Anzahl der Reader und/oder der Anzahl der Reader. Bei Lesegeräten mit mehreren Toren wird je ein Tor an eine Antenne angeschlossen. Beim Lesen von vielen Transpondern werden die Antennen innerhalb des Lesegeräts sequentiell umgeschaltet. Dadurch kann eine höhere Leserate von Transpondern erreicht werden, womit eine reduzierte Erfassungsdauer korrespondiert. Die Erhöhung der Leserate hängt allerdings von der Anordnung der Antennen ab. Um die räumliche Filterung ausnutzen zu können, sind die Antennen möglichst verteilt anzuordnen, so dass deren Richtcharakteristiken gering korrelieren und somit komplementäre Raumbereiche abgedeckt werden. Die verteilte Anordnung geht dabei mit einem hohen Platzbedarf einher.

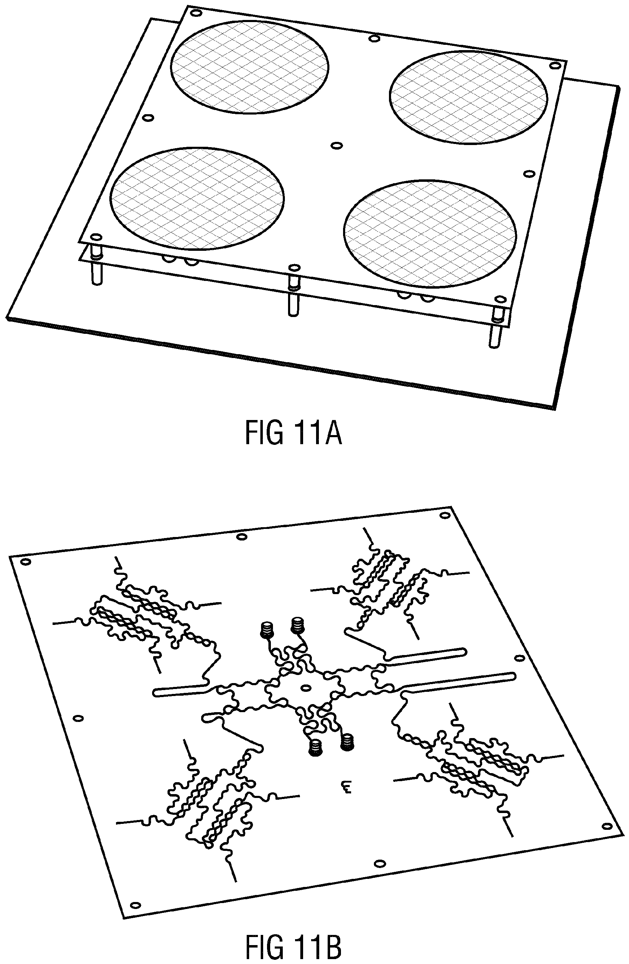

Neben der Verteilung von mehreren Antennen lässt sich die räumliche Filterung alternativ durch ein Speisenetzwerk verwirklichen, wie z.B. durch eine Butler-Matrix, wie sie in [1] beschrieben ist. Fig. 11a zeigt einen beispielhaften Gesamtaufbau einer Mehrkeulenantenne. Fig. 11b zeigt eine Realisierung eines Speisenetzwerks mit Butler-Matrix. In Abhängigkeit davon, an welchem Eingangstor des Netzwerks das Anregungssignal anliegt, prägt sich eine in eine bestimmte Raumrichtung ausgerichtete Richtcharakteristik aus. Das Speisenetzwerk verteilt dazu das Eingangssignal auf alle verfügbaren Antennen, die am Ausgang angeschlossen sind. Durch die jeweilige Phasen- und Amplitudenbelegung, die durch das Speisenetzwerk hervorgerufen wird, kann damit die Richtcharakteristik der Antennen geformt werden. Diese Art der Antenne wird daher Mehrkeulenantenne genannt. Um diese Art der räumlichen Filterung mit bisherigen Lösungen nutzen zu können, sind Lesegeräte mit mehreren Antennenanschlüssen erforderlich, die deutlich höhere Kosten nach sich ziehen, als Geräte mit einem einzelnen Antennenanschluss.

Bei bekannten Lösungen erfolgt die Umschaltung zwischen einzelnen Keulen mittels eines Interfaces, d.h. eine externe Vorrichtung, typischerweise Sensoren zur PositionsErkennung der Palette + externem Interface, gibt die Keulenausprägung vor.

Bei weiteren bekannten Systemen wird eine Vielzahl von Antennen verteilt über einen gesamten Abdeckungsbereich verteilt, die über speziell ausgelegte Lesesysteme angesteuert werden. Es handelt sich hier um kein Mehrkeulensystem. Der Einsatz von Standard-Lesegeräten ist nicht möglich, so dass ein erhöhter Aufwand bezüglich der Komplexität der Lesegeräte und der verteilten Anordnung der Antennen resultiert.

Weitere bekannte Lösungen bieten eine Mehrkeulenlösung mit Keulenformung. Zwar können eine hohe Anzahl von Antennenkeulen erzeugt werden, welche einfach nacheinander aktiv geschaltet werden, jedoch sind die Antennen als sogenannte "Leaky Wave (Leckwellenantennen) ausgeführt und in ihrem Frequenzbereich stark eingeschränkt. Ferner ändert sich mit einer Änderung der Ansteuerfrequenz die Richtcharakteristik der einzelnen Antenne, so dass der Arbeitsbereich der Vorrichtung eingeschränkt ist.

Wünschenswert wäre demnach ein Konzept, mit dem eine effiziente und mit geringem Aufwand bezüglich existierender Lesegeräte umsetzbare Erkennung von Funkerkennungstranspondern erzielt werden kann.

Eine Aufgabe der vorliegenden Erfindung besteht darin, eine Antennenvorrichtung zu schaffen, die eine Erkennungsrate sowie den Sicht- bzw. Lesebereich bestehender Funkerkennungs-Lesegeräte mit geringem Änderungsaufwand gegenüber bekannten Antennensystemen erhöht.

Diese Aufgabe wird durch den Gegenstand der unabhängigen Patentansprüche gelöst.

Eine weitere Aufgabe der vorliegenden Erfindung besteht darin, ein Konzept zu schaffen, das es ermöglicht, einen Informationsgrad bezüglich der erfassten Funkerkennungstransponder, die von einem Funkerkennungs-Leser erfasst werden, zu erhöhen.

Diese Aufgabe wird durch den Gegenstand der abhängigen Patentansprüche gelöst.

Ein Kerngedanke der vorliegenden Erfindung besteht darin, erkannt zu haben, dass ein effizientes Konzept zum Erfassen von Funkerkennungstranspondern geschaffen werden kann, indem eine Antennenvorrichtung eine Berechnungseinrichtung aufweist, die ausgebildet ist, um Speisesignale zum Anlegen an eine Mehrzahl von Antennen zeitvariant zu steuern. Die zeitvariant gesteuerten Speisesignale ermöglichen einen Erhalt einer zeitvarianten Abstrahlcharakteristik der Antennen bzw. des Funksignals und einen gegenüber statischen Abstrahlcharakteristiken erhöhten Sicht- bzw. Lesebereich. Dies ermöglicht ein Umschalten zwischen Abstrahlcharakteristiken unabhängig von äußeren Geräten, wie etwa Interfaces, so dass effiziente, d.h. zeitsparende und/oder eine hohe Erkennungsrate aufweisende, Abfolgen von Abstrahlcharakteristiken basierend auf einer internen Logik genutzt werden können.

Ein weiterer Kerngedanke der vorliegenden Erfindung besteht darin, erkannt zu haben, dass eine Positionsinformation bezüglich einer Transpondervorrichtung in einem Teilbereich eines Erfassungsbereichs der Antennenvorrichtung erhalten werden kann, wenn einer Abstrahlcharakteristik (Keule) ein Teilbereich zugeordnet ist und wenn die Berechnungseinrichtung ausgebildet ist, um ein Antwortsignal der Transpondervorrichtung auszuwerten. Eine Anwesenheit der Transpondervorrichtung in dem Teilbereich kann bestimmt werden, indem die Berechnungseinrichtung bestimmt, mit welcher Abstrahlcharakteristik ein Funksignal, auf welches die Transpondervorrichtung ein Antwortsignal sendet, gesendet worden ist oder wird. Die Positionsinformation kann an einem sich am Antennensystem befindlichen Signalausgang bereitgestellt werden, etwa einer externen Vorrichtung, und ermöglicht eine effiziente Gestaltung von Funkerkennungs-Prozessen, wie Transportrichtung und/oder Ein- Ausgangskontrollen bei gleichzeitiger Identifikation von Objekten.

Gemäß einem Ausführungsbeispiel umfasst eine Antennenvorrichtung eine Abstrahleinrichtung und eine Berechnungseinrichtung. Die Abstrahleinrichtung umfasst eine Mehrzahl von Antennen, die ausgebildet ist, um ein Funksignal mit einer Abstrahlcharakteristik auszusenden. Die Berechnungseinrichtung ist ausgebildet, um basierend auf einem bereitgestellten Identifikationssignal eine Mehrzahl von Speisesignalen zu erzeugen und diese an die Mehrzahl von Antennen anzulegen, um das Funksignal zu erzeugen. Die Berechnungseinrichtung ist ferner ausgebildet, um die Speisesignale zeitvariant zu steuern, so dass das Funksignal mit einer zeitvarianten Abstrahlcharakteristik ausgesendet und empfangen wird.

Wird das Identifikationssignal von einem externen Funkerkennungs-Leser empfangen, so kann die Formung der Abstrahlcharakteristik für das externe Lesegerät transparent erfolgen. Das bedeutet, dass der externe Funkerkennungs-Leser den Unterschied bzw. die erweiterte Funktionalität nicht bemerkt und/oder es keiner Anpassung daran bedarf. Dies ermöglicht den Austausch bisheriger, gegebenenfalls rein passiver, Antennen durch die Antennenvorrichtung, so dass bestehende Lesegeräte eine erhöhte Effizienz aufweisen können.

Gemäß einem weiteren Ausführungsbeispiel ist die Abstrahleinrichtung ausgebildet, um ein Antwortsignal, das auf das Funksignal hin von einer Transpondervorrichtung gesendet wird, zu empfangen. Die Berechnungseinrichtung ist ausgebildet, um basierend auf einer Auswertung des Antwortsignals und der Abstrahlcharakteristik, mit der das Funksignal gesendet worden ist, eine Anwesenheit der Transpondervorrichtung in einem Teilbereich eines Erfassungsbereichs der Abstrahleinrichtung zu bestimmen, wobei der Teilbereich der Abstrahlcharakteristik zugeordnet ist und wobei die Berechnungseinrichtung ferner ausgebildet ist, um eine Positionsinformation, die die Anwesenheit der Transpondervorrichtung in dem Teilbereich anzeigt, an einem Signalausgang bereitzustellen.

Dies ermöglicht eine Nachverfolgung (engl.: tracking) einer Transpondervorrichtung innerhalb des Funkerkennungsbereichs über Teilbereiche hinweg. Auch diese Ausgestaltung kann für ein externes Funkerkennungs-Lesegerät transparent erfolgen, wenn von diesen das Identifikationssignal, basierend auf dem das Funksignal erzeugt wird, empfangen wird. Die gegenüber bekannten Antennen erweiterte Funktionalität wird in der Antennenvorrichtung bereitgestellt, so dass die Antennenvorrichtung auch mit bereits existierenden und diese Funktionalität nicht aufweisenden Funkerkennungs-Lesegeräten kombinierbar ist.

Gemäß einem weiteren Ausführungsbeispiel wird das Identifikationssignal von dem internen Funkerkennungs-Leser bereitgestellt. Dies ermöglicht eine Ausgestaltung der Antennenvorrichtung als Funkerkennungs-Leser, so dass auf einen externen Funkerkennungs-Leser verzichtet werden kann.

Weitere Ausführungsbeispiele beziehen sich auf Funkerkennungssysteme und auf ein Verfahren zum Aussenden eines Funksignals.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: ein schematisches Blockschaltbild einer Antennenvorrichtung mit einer Berechnungseinrichtung und einer Abstrahleinrichtung gemäß einem Ausführungsbeispiel;
- Fig. 2: ein schematisches Blockschaltbild einer Antennenvorrichtung, die eine gegenüber der Antennenvorrichtung aus Fig. 1 eine modifizierte Berechnungseinrichtung aufweist gemäß einem Ausführungsbeispiel;
- Fig. 3a: ein schematisches Blockschaltbild einer Berechnungseinrichtung, bei der gegenüber der Berechnungseinrichtung aus Fig. 2 ein steuerbarer Verteiler als steuerbares Verteilnetzwerk ausgebildet ist gemäß einem Ausführungsbeispiel;
- Fig. 3b: ein schematisches Blockschaltbild des als steuerbares Verteilernetzwerk ausgeführten steuerbaren Verteilers aus Fig. 3a gemäß einem Ausführungsbeispiel;
- Fig. 4: ein schematisches Blockschaltbild einer Berechnungseinrichtung, die gegenüber der Berechnungseinrichtung aus Fig. 3 ein modifiziertes steuerbares Verteilnetzwerk aufweist, das ausgebildet ist, um eine Vielzahl von Identifikationssignalen zu empfangen gemäß einem Ausführungsbeispiel;
- Fig. 5: ein schematisches Blockschaltbild einer Antennenvorrichtung umfassend eine Berechnungseinrichtung, die einen internen Funkerkennungs-Leser aufweist gemäß einem Ausführungsbeispiel;
- Fig. 6a: eine Situation eines Szenarios, bei dem die Antennenvorrichtung aus Fig. 5 ausgebildet ist, um das Funksignal in Teilbereichen sequentiell nacheinander auszusenden, bis eine Transpondervorrichtung erfasst ist gemäß einem Ausführungsbeispiel;
- Fig. 6b: eine Situation des Szenarios, in welchem eine Ansammlung von Transpondervorrichtungen den Erfassungsbereich der Antennenvorrichtung erreicht hat gemäß einem Ausführungsbeispiel;
- Fig. 6c: eine Situation des Szenarios, in der sich die Ansammlung der Transpondervorrichtungen gegenüber den Situationen den Fig. 6a und 6b entlang einer Bewegungsrichtung weiterbewegt hat gemäß einem Ausführungsbeispiel;
- Fig. 6d: eine Situation, in der basierend auf der Aussendung des Funksignals mit jeder der Abstrahlcharakteristiken Transpondervorrichtungen in allen Teilbereichen Antwortsignale senden gemäß einem Ausführungsbeispiel;
- Fig. 6e: eine Situation, in welcher die Ansammlung den Erfassungsbereich der Antennenvorrichtung zumindest teilweise verlassen hat gemäß einem Ausführungsbeispiel;
- Fig. 7: ein weiteres beispielhaftes Szenario, bei dem die Antennenvorrichtung aus Fig. 5 ausgebildet ist, um das Funksignal mit drei Abstrahlcharakteristiken auszusenden, die drei miteinander überlappenden Teilbereichen zugeordnet sind gemäß einem Ausführungsbeispiel;
- Fig. 8: eine schematische Darstellung einer Umschaltung zwischen Richtcharakteristiken gemäß einem Ausführungsbeispiel;
- Fig. 9: ein schematisches Blockschaltbild eines Funkerkennungs-Systems umfassend die Antennenvorrichtung aus Fig. 1, einen externen Funkerkennungs-Leser und eine externe Kommunikationseinrichtung gemäß einem Ausführungsbeispiel;
- Fig. 10: ein schematisches Blockschaltbild eines Funkerkennungs-Systems umfassend die Antennenvorrichtung aus Fig. 5 und die externe Kommunikationseinrichtung gemäß einem Ausführungsbeispiel;
- Fig. 11a: einen beispielhaften Gesamtaufbau einer Mehrkeulenantenne gemäß dem Stand der Technik; und
- Fig. 11b: eine Realisierung eines Speisenetzwerks mit Butler-Matrix gemäß dem Stand der Technik.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

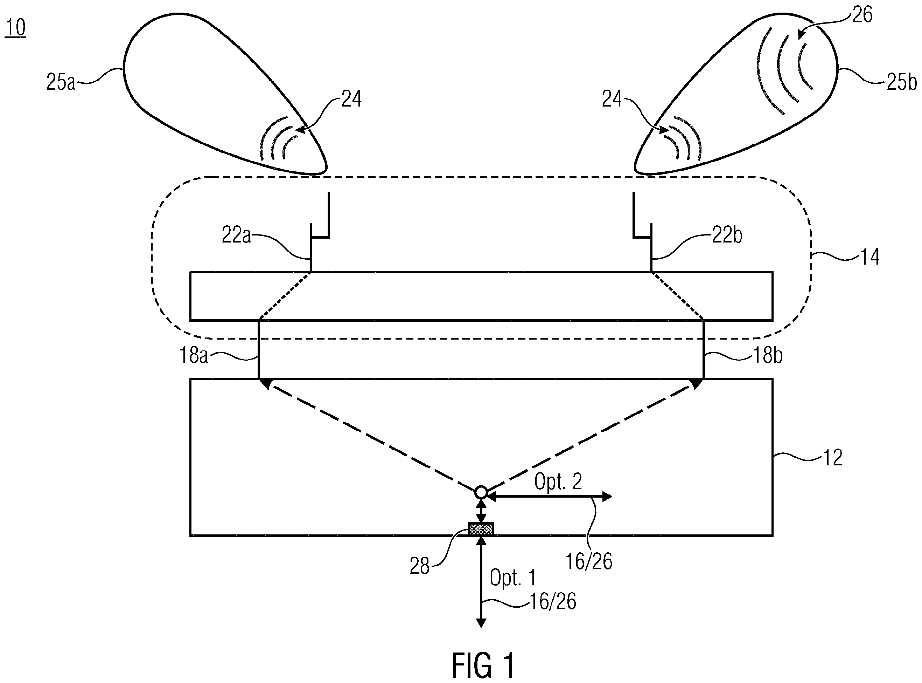

Fig. 1 zeigt ein schematisches Blockschaltbild einer Antennenvorrichtung 10 mit einer Berechnungseinrichtung 12 und einer Abstrahleinrichtung 14. Die Berechnungseinrichtung ist ausgebildet, um basierend auf einem Identifikationssignal 16 Speisesignale 18a und 18b für Antennen 22a und 22b der Abstrahleinrichtung 14 zu erzeugen. Die Abstrahleinrichtung 14 weist zwei Antennen 22a und 22b auf, wobei die Abstrahleinrichtung auch eine größere Anzahl von Antennen aufweisen kann, etwa 3, 4, 5, 8 oder mehr. Die Abstrahleinrichtung 14 bzw. die Antennen 22a und 22b sind ausgebildet, um basierend auf den Speisesignalen 18a und/oder 18b ein Funksignal 24 mit einer Abstrahlcharakteristik 25a und/oder 25b zu erzeugen. Das Funksignal 24 weist mithin voneinander verschiedene Richtcharakteristiken in einem Erfassungsbereich der Antennenvorrichtung 10 bzw. der Abstrahleinrichtung 14 auf. Die Abstrahlcharakteristik 25a und/oder 25b kann sich dabei auf eine bevorzugte Ausbreitungsrichtung des Funksignals 24 beziehen. Bspw. kann zumindest eine Abstrahlcharakteristik 25a oder 25b eine sogenannten Antennenkeule zugeordnet sein. Das bedeutet, dass das Funksignal 24 in einem Teilbereich des (Gesamt-) Erfassungsbereich, der von der Antennenkeule erfasst ist, mit einer bevorzugten Ausbreitung (Signalqualität) ausgesendet wird. Alternativ oder zusätzlich kann sich die Richtcharakteristik auch auf eine Polarisationsrichtung des Funksignals 24 beziehen. Der Gesamterfassungsbereich kann, verglichen mit einer Antennenvorrichtung, die lediglich eine Abstrahlcharakteristik oder eine geringere Anzahl von Abstrahlcharakteristiken aufweist, erhöht sein, etwa wenn mit jeder Abstrahlcharakteristik 25 und 25b ein Teilbereich mit einer unveränderten Größe des jeweiligen Erfassungsbereichs erfasst wird. Dies führt zu einem vergrößerten Sicht- bzw. Lesebereich der Antennenvorrichtung 10 gegenüber den Antennenvorrichtung mit lediglich einer oder der geringeren Anzahl von Abstrahlcharakteristiken.

Das Identifikationssignal 16 kann, wie es durch Option (OPT) 1 angedeutet ist, von einem externen Funkerkennungs-Leser erhalten werden. Die Antennenvorrichtung 10 kann als Antenne dieses externen Funkerkennungs-Lesers montiert, d.h. angeordnet werden. Alternativ oder zusätzlich kann, wie es durch die Option (OPT) 2 angedeutet ist, das Identifikationssignal 16 alternativ oder zusätzlich auch von der Berechnungseinrichtung 12 erzeugt werden. Das bedeutet, dass die Antennenvorrichtung 10 auch die Funktionalität eines Funkerkennungs-Lesers aufweisen kann oder als Funkerkennungs-Leser ausgeführt sein kann. Je nach implementierter Option 1 und/oder 2 kann ein auf das Funksignal 24 hin empfangenes Antwortsignal 26 der Berechnungseinrichtung 12 und/oder dem externen Funkerkennungs-Leser bereitgestellt werden.

Empfängt eine Transpondervorrichtung das Funksignal 24, so erzeugt sie basierend darauf das Antwortsignal 26, wobei das Antwortsignal 26 als ein neu erzeugtes Signal oder eine Modulation, die auf das Funksignal 24 aufmoduliert wird, verstanden werden kann. Die Abstrahleinrichtung 14 ist ausgebildet, um das Antwortsignal 26 mittels der Antennen 22a und/oder 22b zu empfangen.

Die Berechnungseinrichtung ist ausgebildet, um die Speisesignale 18a und 18b zeitvariant zu steuern, etwa basierend auf einem in der Berechnungseinrichtung 12 hinterlegten Algorithmus. Alternativ oder zusätzlich kann die Berechnungseinrichtung 12 auch ausgebildet sein, um die Speisesignale basierend auf einer internen Logik, ggf. ein adaptierbarer Algorithmus, zu steuern, so dass die Formung der Abstrahlcharakteristik während eines Betriebs der Antennenvorrichtung 10 unabhängig von einer äußeren Vorrichtung erfolgen kann. Der Algorithmus kann bspw. während einer Herstellung, Wartung oder Kalibrierung in der Berechnungseinrichtung 12 hinterlegt werden.

Gemäß Option 1 kann das Identifikationssignal 16 somit von einem externen Funkerkennungs-Leser an einem Anschluss 28 der Berechnungseinrichtung 12 erhalten werden, um dem Funkerkennungs-Leser das Antwortsignal 26 bzw. ein hiervon abgeleitetes (Wandlung von drahtlos zu drahtgebunden, gefiltert, etc.) Signal bereitzustellen. Dies ermöglicht, ein ggf. einzelnes Identifikationssignal mit einer Mehrzahl von Abstrahlcharakteristiken 25a-b auszusenden. Weist der externe Funkerkennungs-Leser eine Mehrzahl von Antennenanschlüssen auf, an denen das Identifikationssignal 16 oder mehrere Identifikationssignale bereitgestellt werden, so kann an der Mehrzahl von Antennenanschlüssen eine Mehrzahl von Antennenvorrichtungen 10 angeordnet werden, um einen Sicht- bzw. Lesebereich des externen Funkerkennungslesers weiter zu erhöhen.

Die Antennen 22a und 22b können gleiche oder voneinander verschiedene Abstrahlcharakteristiken 25a und/oder 25b aufweisen. Eine Aussendung des Funksignals 24 mit den verschiedenen Abstrahlcharakteristiken 25a und/oder 25b kann beispielsweise durch eine Überlagerung mehrerer Funksignale, die voneinander verschiedenen Phasen und/oder Amplituden aufweisen, erfolgen. Alternativ oder zusätzlich können die Antennen 22a und 22b eine voneinander verschiedene Richtcharakteristik (Abstrahlcharakteristik) aufweisen und getrennt von einander angesteuert werden. Die Berechnungseinrichtung 12 kann ausgebildet sein, um jeweils einer oder mehrerer Antennen 22a und/oder 22b ein jeweiliges Speisesignal 18a und/oder 18b bereitzustellen, so dass jeweils eine Antenne das Funksignal 24 mit der Abstrahlcharakteristik 25a und/oder 25b erzeugt und so dass das Funksignal 24 etwa jeweils in einem der Abstrahlcharakteristik 25a bzw. 25b zugeordneten Teilbereiche bevorzugt ausgesendet wird. Weisen die Abstrahlcharakteristiken 25a und/oder 25b oder die Teilbereiche eine Keulenform auf, so kann die Antennenvorrichtung 10 als Mehrkeulenantenne bezeichnet werden.

Die Berechnungseinrichtung 12 ist ausgebildet, um die Speisesignale 18a und 18b zeitvariant zu steuern, so dass das Funksignal 24 mit einer oder mehreren zeitvarianten Abstrahlcharakteristiken 25a und 25b ausgesendet wird. Beispielsweise kann die Berechnungseinrichtung 12 ausgebildet sein, um in einem ersten Zeitintervall das Speisesignal 18a und in einem zweiten Zeitintervall, das von dem ersten Zeitintervall verschieden ist, das Speisesignal 18b der jeweiligen Antenne 22a bzw. 22b bereitzustellen. Die Berechnungseinrichtung 12 kann ausgebildet sein, um die zeitvariante Steuerung gemäß einem vordefinierten und in der Berechnungseinrichtung 12 hinterlegten Ablauf auszuführen. Alternativ oder zusätzlich kann die Berechnungseinrichtung 12 ausgebildet sein, einen Ablauf der zeitvarianten Steuerung der Abstrahlcharakteristiken 25a und 25b selbst zu steuern oder anzupassen, etwa wenn das Antwortsignal 26 empfangen wird und von der Berechnungseinrichtung 12 ausgewertet wird. Dies ermöglicht eine Erhöhung der Identifikationsrate von Transpondervorrichtungen (sog. Tags). Beispielsweise können die Abstrahlcharakteristiken 25a und 25b den Raum überlappen, wobei die Transpondervorrichtung gegenüber einer der Abstrahlcharakteristiken 25a oder 25b eine erhöhte Empfindlichkeit aufweist und basierend auf der Abstrahlcharakteristik 25a oder 25b mit der erhöhten Empfindlichkeit das Antwortsignal 26 früher sendet. Die Anpassung der Abstrahlcharakteristiken 25a und 25b kann unabhängig von externen Vorrichtungen (Lesevorrichtungen oder Interfaces zur Steuerung der Antennenvorrichtung) erfolgen.

Ferner kann die Antennenvorrichtung 10, verglichen beispielsweise mit einer rein passiven Antenne, eine Mehrkeulen-Funktionalität für den externen Funkerkennungs-Leser transparent aufweisen, da die Funktionalität der Variation der Abstrahlcharakteristik 25a-b mittels der Antennenvorrichtung 10 bereitgestellt wird und der Funkerkennungs-Leser weiterhin das (ggf. unveränderte) Signal bereitstellt, das er auch an die passive Antenne bereitgestellt hätte. Dies ermöglicht eine einfache Erweiterung der Funktionalität eines RFID-Lesers und/oder eines RFID-Tores gegenüber Antennenvorrichtungen mit unveränderlichen oder von extern gesteuerten Abstrahlcharakteristiken, so dass eine effiziente, d. h., schnelle und/oder eine hohe Erkennungsrate aufweisende, Funktionalität erhalten werden kann.

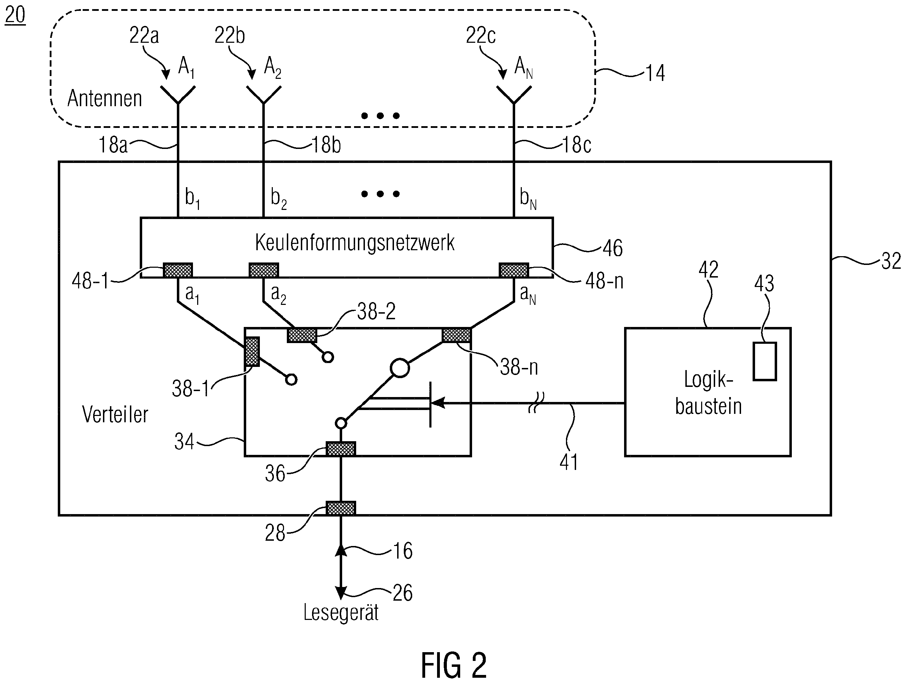

Fig. 2 zeigt ein schematisches Blockschaltbild einer Antennenvorrichtung 20, die eine gegenüber der Antennenvorrichtung 10 modifizierte Berechnungseinrichtung 32 aufweist.

Die Berechnungseinrichtung 32 umfasst den Anschluss 28 zum drahtgebundenen oder drahtlosen Empfangen des Identifikationssignals 16 von einem externen Funkerkennungs-Leser und zum Senden des Antwortsignals 26 an den externen Funkerkennungs-Leser.

Die Berechnungseinrichtung 32 umfasst einen steuerbaren Verteiler 34, der einen Signaleingang 36 und eine Mehrzahl von n Signalausgängen 38-1, 38-2, .... 38-n aufweist. Der steuerbare Verteiler 34 ist ausgebildet, um das Identifikationssignal 16 basierend auf einer erhaltenen Ansteuerung 41 an einen der Signalausgänge 38-1 bis 38-n anzulegen. Die Berechnungseinrichtung 32 umfasst einen Logik-Baustein 42, etwa einen in Hardware implementierten Algorithmus, der ausgebildet ist, um den steuerbaren Verteiler 34 mittels der Ansteuerung (Steuersignal) 41 zeitvariant zu steuern, so dass der steuerbare Verteiler 34 das Identifikationssignal zeitvariant an verschiedenen Signalausgängen 38-1 bis 38-n anlegt. Alternativ oder zusätzlich kann der Logik-Baustein 42 einen Speicher 43 aufweisen, der ausgebildet ist, um den Algorithmus in Form eines Codes (Software) zu speichern und auszuführen. Das bedeutet, dass der Algorithmus in Hardware oder Software implementiert sein kann.

Gemäß einer Ausführungsvariante ist der Logikbaustein 42 ausgebildet, um den steuerbaren Verteiler 34 so anzusteuern, dass dieser sequentiell aufeinanderfolgend das Identifikationssignal 16 jeweils an einen Signalausgang 38-1 bis 38-n anlegt. Basierend darauf kann jeweils eine Abstrahlcharakteristik 25a oder 25b der Abstrahleinrichtung 14 erhalten werden, während eine andere Abstrahlcharakteristik 25b bzw. 25 nicht erhalten wird.

Der steuerbare Verteiler 34 ist ausgebildet, um an den Signalausgängen Steuersignale a₁, a₂, ... a_{N} auszugeben. Bei den Ansteuersignalen a₁ bis a_{N} kann es sich um das Identifikationssignal 16 handeln, etwa wenn der steuerbare Verteiler 34 als variabler Schalter (Weiche) ausgeführt ist. Alternativ kann es sich bei den Steuersignalen a₁ bis a_{N} um aus dem Identifikationssignal 16 abgeleitete Signale handeln, wobei sich eine Ableitung der Signale bspw. auf eine Veränderung der Phase und/oder der Amplitude beziehen kann.

Die Berechnungseinrichtung 12 umfasst einen Keulenformer 46, beispielsweise in Form eines verdrahteten oder als Software ausgeführten Netzwerks, das ausgebildet ist, um an Signaleingängen 48-1, ... 48-N die Ansteuersignale a₁, ... a_{N} zu empfangen und um die als b₁, b₂, ... b_{N} bezeichneten Speisesignale 18a-c für die als A₁, A₂, ... A_{N} bezeichneten Antennen 22a-c bereitzustellen. Bei dem Keulenformer 46 kann es sich beispielsweise um ein Butler-Netzwerk bzw. eine Butler-Matrix handeln. Der Keulenformer 46 kann so an die Antennen 22a-c angepasst sein, dass je ein Signaleingang oder eine Kombination von Signaleingängen einer erhaltenen Abstrahlcharakteristik des Funksignals zugeordnet ist.

Vereinfacht ausgedrückt ist der Logikbaustein 42 ausgebildet, um einen oder mehrere Signalausgänge, an denen der steuerbare Verteiler 34 das oder die Steuersignal(e) a₁ bis a_{N} ausgibt zu steuern, wobei basierend auf veränderlichen Signaleingängen 48-1 bis 48-N, an denen die Steuersignale a₁ bis a_{N} von dem Keulenformer 46 erhalten werden, eine veränderliche Abstrahlcharakteristik des Funksignals erhalten wird.

In anderen Worten zeigt Fig. 2 ein Prinzip einer RFID-Mehrkeulenantenne zur hochfrequenten Identifizierung, das heißt zum Auslesen von passiven RFID-Transpondern, die mit einem einzelnen Anschluss für das Lesegerät auskommt. Die Mehrkeulenantenne (Antennenvorrichtung 20) besteht aus einer Menge von Antennen 22a-c, die an ein Speisenetzwerk (Keulenformer 46) angeschlossen sind. Mit dem Speisenetzwerk können verschiedene Speisungen der Antennen realisiert werden, so dass sich verschiedene Richtcharakteristiken ausprägen. Welche Speisung zu einem bestimmten Zeitpunkt genutzt wird, kann die Mehrkeulenantenne autonom (etwa basierend auf dem Algorithmus) festlegen und muss nicht vom Lesegerät gesteuert werden. Der Wechsel zwischen verschiedenen Speisungen kann dabei abhängig vom jeweiligen Szenario erfolgen. So sind zufällige Wechsel, sequentielle, periodische Wechsel oder andere Muster möglich. Die RFID-Mehrkeulenantennen besitzt dazu eine Logikeinheit 42, die den Wechsel zwischen den Speisungen kontrolliert, d.h. steuert.

Für das Lesegerät erfolgt die Interaktion mit den Transpondern transparent. Das Anregungssignal (Identifikationssignal 16) vom Leser wird der RFID-Mehrkeulenantenne zugeführt. Diese strahlt es dann über die verschiedenen Richtcharakteristiken ab. Die Antwortsignale, die die einzelnen Antennen zur Verfügung stellen, werden dann je nach gewählter Speisung konstruktiv überlagert und über den Antennenanschluss am Lesegerät zur Verfügung gestellt. Damit kann auch mit einem Lesegerät eine räumliche Filterung erreicht werden, das nur einen Antennenanschluss aufweist.

Die Berechnungseinrichtung 12 beinhaltet einen Schalter (steuerbaren Verteiler 34), der das Signal vom Lesegerät auf ein einzelnes Tor (Signaleingang 48-1 bis 48-n) des Keulenformungsnetzwerks (Keulenformer 46) legt. Mit der Speisung eines einzelnen Tors korrespondiert eine bestimmte Richtcharakteristik des Funksignals. Zwischen den verschiedenen Richtcharakteristiken kann umgeschaltet werden, dabei wird die Umschaltung durch den Logikbaustein gesteuert. Die Umschaltung und die damit verbundenen Richtcharakteristiken wirken sowohl im Sende- als auch im Empfangsfall. Die Antennenvorrichtung 20 kann somit als RFID-Mehrkeulenantenne mit autonomer Umschaltung zwischen verschiedenen Richtcharakteristiken bezeichnet werden.

Alternativ oder zusätzlich kann zumindest eine der Antennen 22a-c bzw. A₁-A_{N} als Antennenvorrichtung 10 ausgeführt sein, so dass jedes der Speisesignale 18a-c als Identifikationssignal der angeordneten Antennenvorrichtung 10 nutzbar ist. Dies ermöglicht eine weitere Vergrößerung des Sicht- bzw. Lesebereichs (Erfassungsbereich) der Antennenvorrichtung.

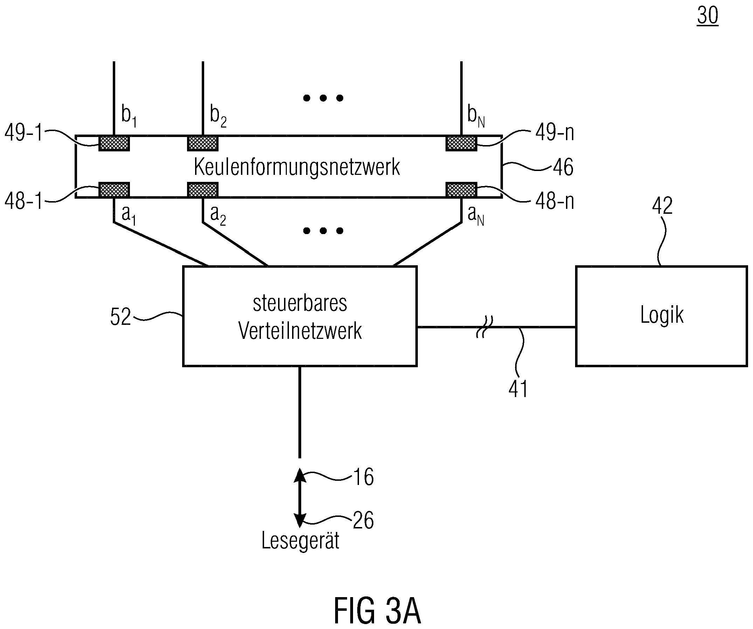

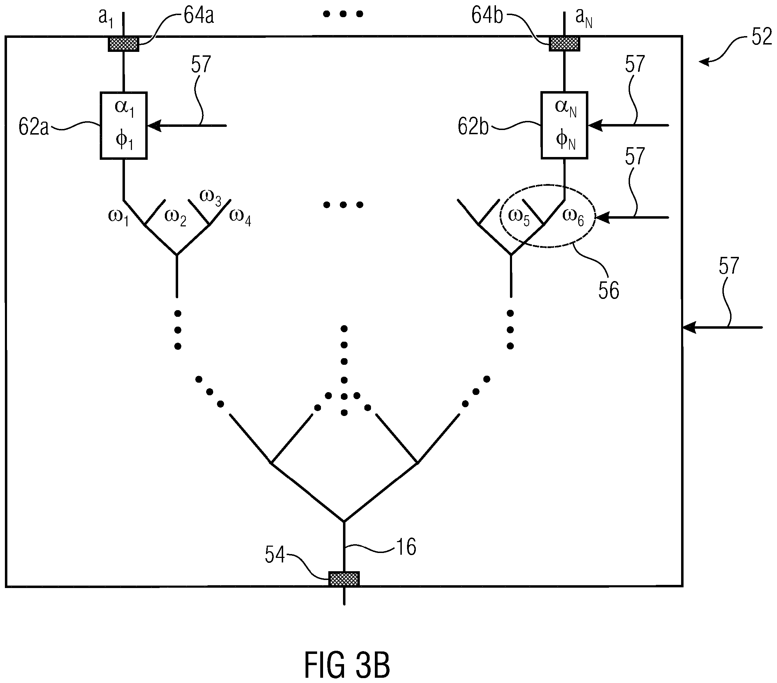

Fig. 3a zeigt ein schematisches Blockschaltbild einer Berechnungseinrichtung 30, bei der gegenüber der Berechnungseinrichtung 32 der Antennenvorrichtung 20 ein steuerbarer Verteiler 52 als steuerbares Verteilnetzwerk ausgebildet ist. Die Berechnungseinrichtung 30 kann an oder in der Antennenvorrichtung 10 oder 20 angeordnet werden. Das steuerbare Verteilnetzwerk ermöglicht, wie es anhand von Fig. 3b erläutert wird, gegenüber einem direkten Weiterleiten des Identifikationssignals 16 von einem Signaleingang zu einem variablen Signalausgang einen zeitgleichen Erhalt zweier oder mehrerer Steuersignale a₁-aₙ. Der Keulenformer 46 kann zeitgleich an mehreren Signaleingängen 48-1 bis 48-N mit einem Eingangssignal beaufschlagt werden, so dass ein oder mehrere Speisesignale b₁ bis b_{N} an Signalausgängen 49-1 bis 49-n des Keulenformers 46 erhalten werden können. Dies ermöglicht eine Überlagerung mehrerer Richtcharakteristiken des ausgesendeten Funksignals. Vereinfacht ausgedrückt wird der steuerbare Verteiler 52 gegenüber dem als Schalter ausgebildeten steuerbaren Verteiler 34 parallelisiert genutzt, es können mehrere Ausgangssignale a₁-aₙ basierend auf dem Identifikationssignal 16 erhalten werden.

Ferner ermöglicht der steuerbare Verteiler 52 bzw. das steuerbare Verteilnetzwerk eine Anpassung der jeweiligen Ausgangssignale a₁ bis a_{N}, wie es nachfolgend erläutert wird. Die Berechnungseinrichtung 30 kann alternativ zu der Berechnungseinrichtung 32 in der Antennenvorrichtung 20 oder alternativ zu der Berechnungseinrichtung 12 in der Antennenvorrichtung 10 angeordnet sein.

In anderen Worten zeigt Fig. 3a einen Ausschnitt einer möglichen Ausführung einer RFID-Mehrkeulenantenne mit autonomer Umschaltung zwischen verschiedenen Richtcharakteristiken mit Hilfe eines steuerbaren Verteilnetzwerks.

Fig. 3b zeigt ein schematisches Blockschaltbild des als steuerbares Verteilernetzwerk ausgeführten steuerbaren Verteilers 52 aus Fig. 3a. Das steuerbare Verteilernetzwerk 52 umfasst einen Signaleingang 54 zum Empfangen des Identifikationssignals 16. Das steuerbare Verteilernetzwerk 52 umfasst ferner eine Vielzahl von Verzweigungen (Weiche) 55, die jeweils ausgebildet sind, um ein empfangenes Signal in zwei oder alternativ mehre Verzweigungssignale zu verzweigen. Die Verzweigungssignale können dabei durch Gewichtungsfaktoren w₁-w₆ gesteuert werden, so dass eine Verteilung des jeweils von einer Verzweigung 55 empfangenen Signals in die erhaltenen Verzweigungssignale symmetrisch (zumindest zwei Gewichtungsfaktoren einer Weiche gleich) und/oder asymmetrisch (zumindest zwei Gewichtungsfaktoren sind ungleich) erfolgen kann. Das steuerbare Verteilnetzwerk 52 ist ausgebildet, um die Verstärkungs- bzw. Dämpfungsfaktoren α₁ ... α_{N} und/oder Phasenwerte φ₁ ... φ_{N} und ggf. die Gewichtungsfaktoren w₁-w₆ basierend auf dem Signal 57 zu steuern. Bei dem Signal 57 kann es sich um das Steuersignal 41 handeln.

Das steuerbare Verteilnetzwerk 52 umfasst ferner Signalanpasser 62a und 62b, die zwischen die Verzweigungen 55 und Signalausgänge 64a und 64b des steuerbaren Verteilnetzwerks 52 geschaltet sind. Die Signalanpasser 62a und 62b sind ausgebildet, um ein von den Verzweigungen 55 erhaltenes Signal anzupassen. Eine Anpassung kann sich beispielsweise auf eine Amplitudenanpassung mittels eines Dämpfungs- oder Verstärkungsfaktors α₁ bis α_{N} und/oder auf eine Phasenanpassung mittels einer Phasenverschiebung φ₁ bis φ_{N} beziehen. Zwischen die Signalanpasser 62a bzw. 62b und die Signalausgänge 64a bzw. 64b können weitere Verzweigungen 55 angeordnet sein. Basierend auf den Gewichtungsfaktoren w₁ bis w₆ und den Signalanpassern 62a und 62b können basierend auf dem Identifikationssignal 16 ein oder mehrere Ansteuersignale a₁ bis a_{N} erhalten werden.

In anderen Worten kann neben der Umschaltung auf ein einzelnes Tor des Keulenformungsnetzwerks das Signal des Lesegeräts auch auf mehrere Tore des Keulenformungsnetzwerks aufgeteilt werden. Dazu dient das steuerbare Verteilnetzwerk (steuerbare Verteiler 52), das über den Logikbaustein gesteuert wird. Das Signal des Lesegeräts wird in die Signale a₁ ... a_{N} transformiert. Die einzelnen Signale a₁ ... a_{N} können unabhängig voneinander einen endlichen Wert annehmen und/oder verschwindend, gegebenenfalls null sein. Aus den Signalen a₁ ... a_{N} erzeugt das Keulenformungsnetzwerk die Signale b₁ ... b_{N} zur Speisung der Antenne. Die steuerbare Verteilung und die damit verbundenen Richtcharakteristiken wirken sowohl im Sende- als auch im Empfangsfall.

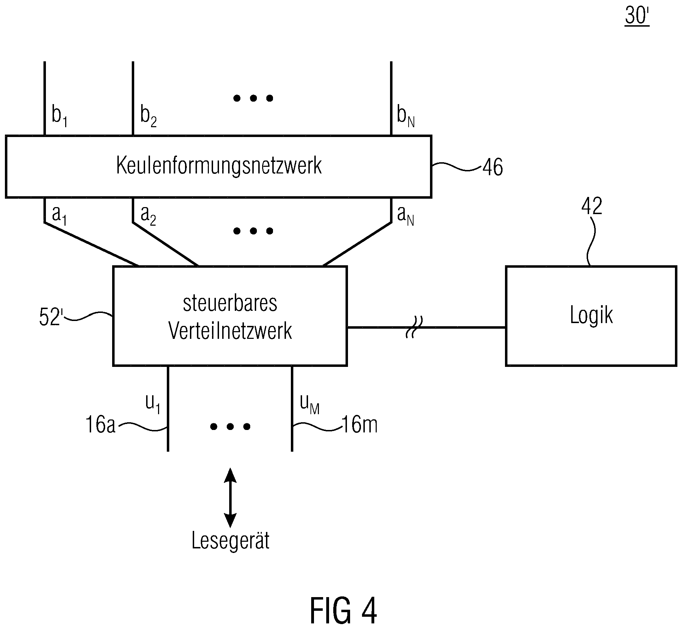

Fig. 4 zeigt ein schematisches Blockschaltbild einer Berechnungseinrichtung 30', die gegenüber der Berechnungseinrichtung 30 ein modifiziertes steuerbares Verteilnetzwerk 52' (steuerbarer Verteiler) aufweist. Das steuerbare Verteilnetzwerk 52' ist ausgebildet, um eine Vielzahl von Identifikationssignalen 16a bis 16m zu empfangen, etwa eine Anzahl von m = 2, 3, 4 oder mehr. Das Empfangen kann zeitgleich erfolgen, d.h. es können mehrere Identifikationssignale 16a-m zu einem Zeitpunkt oder während eines Zeitintervalls empfangen werden. Das steuerbare Verteilnetzwerk 52' ist ausgebildet, um die Ansteuersignale a₁ bis a_{N} basierend auf den sequentiell oder parallel empfangenen Identifikationssignalen 16a-m zu erzeugen. Bei den Identifikationssignalen 16a-m kann es sich beispielsweise um Identifikationssignale eines einzelnen externen Funkerkennungs-Lesers (RFID-Lesegerät) handeln, der diese an einer Vielzahl seiner Antennenanschlüsse bereitstellt. Ist der externe Funkerkennungs-Leser beispielsweise ausgebildet, um mit vier Antennen gekoppelt zu werden, so kann dieser vier Antennensignale (Identifikationssignale) bereitstellen.

Alternativ können die Identifikationssignale 16a-m auch von verschiedenen externen Funkerkennungs-Lesern empfangen werden, das bedeutet, die externen Funkerkennungs-Leser sind mittels der Berechnungseinrichtung 30' koppelbar.

In anderen Worten kann es sich bei dem Signal des Lesegeräts um ein einzelnes Signal handeln (Fig. 3a) oder um eine Menge von Signalen u₁ ... u_{M} bzw. 16a-16m (Fig. 4). Die Signale u₁ ... u_{M} werden über das steuerbare Verteilnetzwerk in die Signale a₁ ... a_{N} transformiert, mit denen das Keulenformungsnetzwerk gespeist wird. Dies erzeugt die Signale b₁ ... b_{N} zur Anregung der Antenne(n). Damit korrespondiert eine bestimmte Richtcharakteristik. Mit Hilfe des Logikbausteins können verschiedene Varianten der Signale a₁ ... a_{N} aus dem Signal bzw. den Signalen u₁ ... u_{M} erzeugt werden. Damit können verschiedene Richtcharakteristiken eingestellt werden. Die steuerbare Verteilung und die damit verbundenen Richtcharakteristiken wirken sowohl im Sende- als auch im Empfangsfall.

Die Signale u₁ ... u_{M} können entweder durch ein einzelnes Lesegerät oder durch mehrere verschiedene Lesegeräte bereitgestellt werden. Es können also Lesegeräte mit einem einzelnen Signalanschluss oder mit mehreren Signalanschlüssen genutzt und mit der Berechnungseinrichtung gekoppelt werden. Ebenso können mehrere Lesegeräte mit einem einzelnen Signalanschluss oder mit mehreren Signalanschlüssen genutzt werden. Die eingesetzten Lesegeräte können hinsichtlich ihrer Zahl an Signalanschlüssen variieren. Fig. 4 zeigt somit einen Ausschnitt einer möglichen Ausführung einer RFID-Mehrkeulenantenne mit autonomer Umschaltung zwischen verschiedenen Richtcharakteristiken mit Hilfe eines steuerbaren Verteilnetzwerks und für den Fall mehrerer Signale von und zum Lesegerät oder von und zu mehreren Lesegeräten.

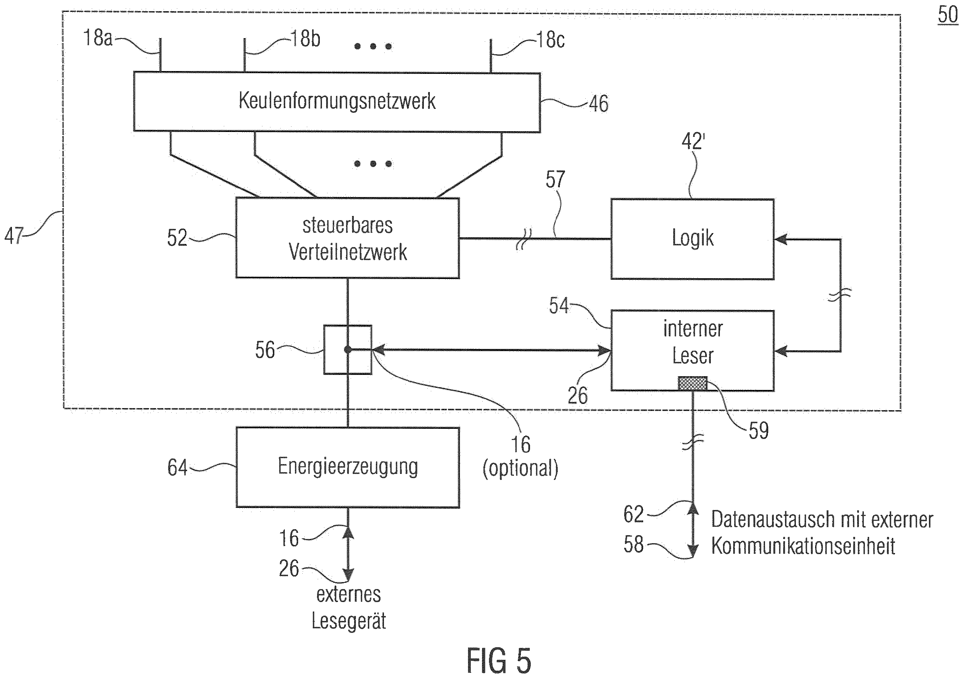

Fig. 5 zeigt ein schematisches Blockschaltbild einer Antennenvorrichtung 50 umfassend eine Berechnungseinrichtung 47. Die Berechnungseinrichtung 47 weist gegenüber der Berechnungseinrichtung 30 einen internen Funkerkennungs-Leser 54 auf, der ausgebildet ist, um das Antwortsignal 26 auszuwerten. Der interne Funkerkennungs-Leser 54 kann bspw. als Prozessor(einrichtung), als feldprogrammierbares Gatterarray (Field Programmable Gate Array - FPGA) oder dergleichen ausgeführt sein. Die Berechnungseinrichtung 50 weist einen Signalkoppler 56 auf, der ausgebildet ist, um das Ausgangssignal 26 von dem steuerbaren Verteilnetzwerk 52 zu empfangen, um einen Anteil des Antwortsignals 26 auszukoppeln und/oder um das Ausgangssignal 26 zu duplizieren, so dass das Ausgangssignal 26 dem internen Funkerkennungsleser 54 und dem externen Funkerkennungs-Leser bereitstellbar ist. Ferner ist der interne Funkerkennungs-Leser 54 ausgebildet, um einen Logikbaustein 42' zu steuern beispielsweise, um eine Abstrahlcharakteristik des Funksignals vorzugeben. Der Logikbaustein 42' ist gegenüber dem Logikbaustein 42 dahin gehend modifiziert, dass er mittels des internen Funkerkennungs-Lesers 54 steuerbar ist, d. h., dass der implementierte Algorithmus durch den internen Funkerkennungs-Leser 54 anpassbar ist.

Der interne Funkerkennungs-Leser 54 ist ausgebildet, um das erhaltene Antwortsignal 26 bzw. darin enthaltene Informationen, wie etwa eine Transponder-Kennung, mit einer Abstrahlcharakteristik, mit der das Funksignal gesendet wird oder zum Zeitpunkt des Sendens des Antwortsignals 26 gesendet worden ist, zu verknüpfen. Eine Verknüpfung der Abstrahlcharakteristik mit dem Teilbereich des Erfassungsbereich ermöglicht so den Erhalt einer Positionsinformation bezüglich einer Anwesenheit der Transpondervorrichtung, die das Antwortsignal gesendet hat, in dem jeweiligen Teilbereich, für dessen Abstrahlcharakteristik das Funksignal gesendet wird oder wurde. Vereinfacht ausgedrückt, ist die Berechnungseinrichtung 47 ausgebildet, um eine Positionsinformation der antwortenden Transpondervorrichtung mittels der Zuordnung derselben zu dem Teilbereich und mittels des internen Funkerkennungs-Lesers 54 zu bestimmen.

Der Internetfunkerkennungs-Leser 54 weist eine Datenschnittstelle 59 zum Austausch eines Datensignals 58 umfassend die Positionsinformation mit einer externen Kommunikationseinheit auf. Die Datenschnittstelle kann drahtgebunden oder drahtlos ausgeführt sein. Die externe Kommunikationseinheit kann beispielsweise eine Steuerungs- und/oder Auswerteeinrichtung sein, die ausgebildet, um von dem internen Funkerkennungs-Leser 54 bereitgestellte Positionsinformationen auszuwerten. Mittels des Datensignals 58 ausgegebene Positionsinformationen können beispielsweise eine Anzahl, eine oder mehrere Kennungen (Identifikationen - IDs) und/oder Bewegungsinformationen von Transpondervorrichtungen in dem Erfassungsbereich oder Teilbereich umfassen. Ferner kann die Positionsinformation einen Übertritt der Transpondervorrichtung von einem Teilbereich in einen anderen Teilbereich umfassen.

Der interne Funkerkennungs-Leser 54 ist ferner ausgebildet, um mittels der Datenschnittstelle 59 oder einer weiteren Datenschnittstelle ein Datensignal 62 von der externen Kommunikationseinheit zu empfangen. Bei dem Datensignal 62 kann es sich beispielsweise um einen Steuerungsbefehl (AN, AUS, Informationen bezüglich eines Betriebsmodus, Änderungen bzgl. des auszuführenden Algorithmus des Logikbausteins 42', etc.) handeln. So kann das Datensignal 62 beispielsweise auch einen Suchbefehl bezüglich einer oder mehrerer Transpondervorrichtungen umfassen. Wird beispielsweise mittels des Datensignals 62 eine zu suchende Kennung oder dergleichen an den internen Funkerkennungs-Leser 54 übermittelt, so kann dieser, wenn das Antwortsignal 26 die Kennung oder eine Information der gesuchten Transpondervorrichtung aufweist, eine entsprechende Information mittels des Datensignals 58 ausgeben, etwa: "die gesuchte Transpondervorrichtung wurde im Teilbereich x erkannt". Ferner kann der interne Funkerkennungs-Leser 54 ausgebildet sein, um den Logik-Baustein 42' basierend auf dem Datensignal 62 zu steuern, etwa um von einer sequentiellen Umschaltung zwischen Abstrahlcharakteristiken zu einer parallelen Ausformung von Abstrahlcharakteristiken oder dergleichen umzuschalten.

Die Berechnungseinrichtung 50 umfasst ferner eine Einrichtung 64 zur Energieerzeugung bzw. zum Energieernten (engl.: energy harvesting). Die Einrichtung 64 ist ausgebildet, um einen Anteil des Identifikationssignals 16 auszukoppeln und um basierend auf dem ausgekoppelten Anteil eine elektrische Energie zum Betrieb der Berechnungseinrichtung 50 oder von Komponenten hiervon bereitzustellen. Dies ermöglicht einen energieautarken Betrieb der Berechnungseinrichtung 50 und mithin der jeweiligen Antennenvorrichtung. So kann eine Antennenvorrichtung, die die Berechnungseinrichtung 47 umfasst. Dies ermöglicht den Einsatz der Antennenvorrichtung 50 als Nachrüst-Lösung und/oder Ersatz anderer Antennen des externen Funkerkennungs-Lesers. Die Antennenvorrichtung 50 weist einen geringen oder keinen externen Energiebedarf auf. So können externe Funkerkennungs-Leser, die ausgebildet sind, um Identifikationssignale mittels passiver Antennen abzustrahlen, um die Funktionalität der Antennenvorrichtung 50 erweitert werden, ohne dass die Antennenvorrichtung 50 eine zusätzliche externe Energieversorgung benötigt.

Alternativ oder zusätzlich kann die Einrichtung 64 zur Energieerzeugung auch in den Antennenvorrichtungen 10 und/oder 20 angeordnet sein.

Alternativ hierzu kann die Antennenvorrichtung 50 auch so ausgeführt sein, dass die Berechnungseinrichtung 47 bzw. der interne Funkerkennungs-Leser 54 das Identifikationssignal 16 intern bereitstellt. Das bedeutet, dass die Antennenvorrichtung 50 auch als (eigenständiger) Funkerkennungs-Leser ausgeführt sein kann und ein Empfang des Identifikationssignals 16 von dem externen Funkerkennungs-Leser und/oder ein Weiterleiten des Antwortsignals 26 an diesen entfallen kann. Ein derartiger eigenständiger Funkerkennungs-Leser kann auch ohne eine Einrichtung 64 zur Energieerzeugung ausgeführt sein und eine Energie zum Betrieb der Antennenvorrichtung 50 und/oder der Berechnungseinrichtung 47 von einer anderen Energiequelle, etwa einem Netzanschluss, erhalten. Alternativ kann der interne Funkerkennungs-Leser auch ausgebildet sein, um mehrere Identifikationssignale von einer oder mehreren externen Lese-Vorrichtungen zu erhalten und/oder um mehrere Identifikationssignale intern zu erzeugen.

In anderen Worten kann die RFID-Mehrkeulenantenne als zusätzlichen Baustein ein RFID-Lesemodul enthalten, das eine Identifizierung von Transpondern ermöglicht. Basierend auf der Identifikation können damit Schlussfolgerungen hinsichtlich der Position des Transponders getroffen werden. Ein Teil des Signals vom und zum Lesegerät wird auf einen integrierten Leser (interner Funkerkennungs-Leser 54) gegeben. Dieser ermöglicht die Identifizierung der gelesenen Transponder. Der integrierte Leser steht in Verbindung mit dem Logikbaustein, der ein steuerbares Verteilnetzwerk und damit die Verteilung des Signals des Lesers kontrolliert. Der Logikbaustein und der integrierte Leser können als eine Einheit angesehen werden. Die Einheit kann jedem identifiziertem Transponder eine bestimmte Richtcharakteristik zuordnen. Diese Information kann über eine Schnittstelle an eine externe Kontrolleinheit gegeben werden. Die Schnittstelle kann kabelgebunden (z.B. eine serielle Schnittstelle, eine Netzwerkschnittstelle oder dergleichen) oder drahtlos (etwa eine WLAN-Schnittstelle, eine Bluetooth-Schnittstelle, eine Mobilfunk-Schnittstelle oder dergleichen) sein. Die Ausführungsform der Berechnungseinrichtung 47 kann mit den Ausführungsformen von Berechnungseinrichtungen in den Fig. 1, 2, 3a und 4 kombiniert werden. Fig. 5 zeigt somit einen Ausschnitt einer möglichen Ausführung einer RFID-Mehrkeulenantenne mit autonomer Umschaltung zwischen verschiedenen Richtcharakteristiken mit integriertem Lesebaustein ("integrierter Leser") und einer Datenschnittstelle zum Datenaustausch mit einer externen Kontrolleinheit.

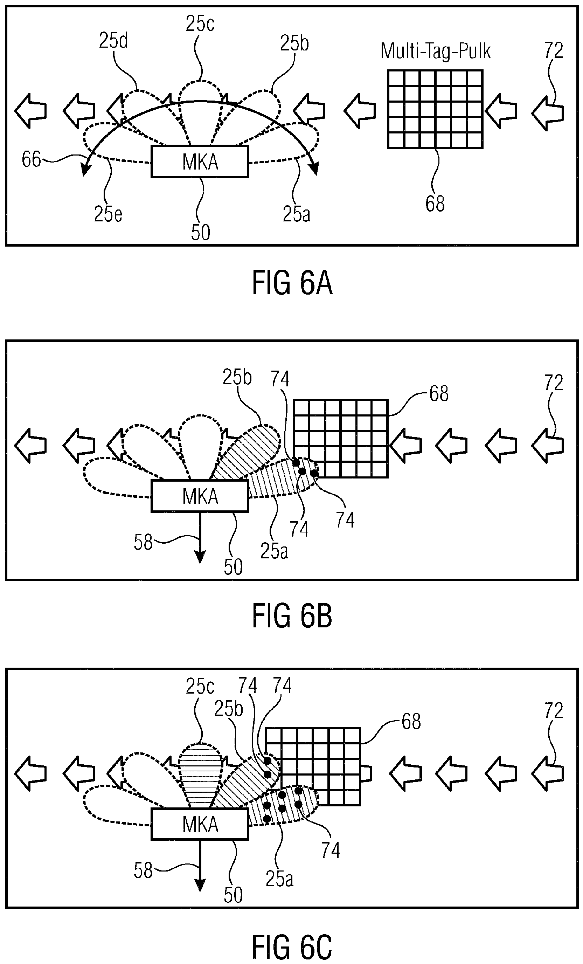

Nachfolgend wird anhand der Fig. 6a-e ein Beispielszenario zur Verdeutlichung der Gewinnung von Positionsinformationen erläutert.

Abstrahlcharakteristiken 25a-e der Antennenvorrichtung 50 sind als Keule ausgeformt. Die Teilbereiche entsprechen einer Fläche oder einem Volumen der jeweiligen Keule.

Die Antennenvorrichtung 50 (Mehrkeulenantenne-MKA) weist beispielhaft fünf Abstrahlcharakteristiken 25a-e auf, die jeweils einen Teilbereich des durch die Gesamtheit an Abstrahlcharakteristiken 25a-e gebildeten Erfassungsbereichs der Antennenvorrichtung 50 zugeordnet sind. Alternativ kann die Antennenvorrichtung 50 auch mehr oder weniger als fünf Abstrahlcharakteristiken aufweisen, die einer Anzahl von mehr oder weniger als fünf Teilbereichen zugeordnet sind. Die Antennenvorrichtung 50 kann beispielsweise zwei (etwa links/rechts, oben/unten oder dergleichen) Teilbereiche erfassen oder auch eine höhere Anzahl von Teilbereichen die überlappend oder nicht-überlappend im Raum angeordnet sein können. Jedem Teilbereich ist zumindest eine der Abstrahlcharakteristiken 25a-e zugeordnet.

Fig. 6a zeigt eine Situation (erstes Zeitintervall) des Szenarios, bei dem die Antennenvorrichtung 50 ausgebildet ist, um das Funksignal in den Teilbereichen bzw. mittels der Abstrahlcharakteristiken 25a-e sequentiell nacheinander auszusenden, bis eine Transpondervorrichtung erfasst ist. Alternativ kann die Antennenvorrichtung 50 auch ausgebildet sein, um das Funksignal mit zumindest zwei Abstrahlcharakteristiken zeitgleich, d.h. parallel, auszusenden. Das zeitgleiche Aussenden kann sich dabei auf einen mit einer hohen Schaltrate ausgeführten Wechsel zwischen der Abstrahlung mit verschiedenen Abstrahlcharakteristiken oder auf eine über einen Zeitraum kontinuierlich und zeitgleich erhaltene Mehrzahl von Abstrahlcharakteristiken beziehen. Mittels einer sequentiellen Aussendung des Funksignals mit den Abstrahlcharakteristiken 25a-e gemäß einem Hin und Her-Prinzip, wie es durch den Pfeil 66 angedeutet ist, kann eine rotierende Abfrage nach Transpondervorrichtungen in den Teilbereichen erzielt werden. Dies kann auch als eine rotierende Beam-Anfrage zur Tag-Erkennung bezeichnet werden.

Eine Ansammlung 68 von Transpondervorrichtungen, etwa eine Palette mit einer Mehrzahl oder Vielzahl von Objekten, die mit Transpondern versehen sind, ist außerhalb des Erfassungsbereichs der Antennenvorrichtung 50 angeordnet und bewegt sich mittels einer Bewegung entlang einer Bewegungsrichtung 72 auf den Erfassungsbereich der Antennenvorrichtung 50 zu.

Fig. 6b zeigt eine Situation (zweites Zeitintervall) des Szenarios, in welchem die Ansammlung 68 den Erfassungsbereich der Antennenvorrichtung 50 erreicht hat und die Antennenvorrichtung 50 in dem Teilbereich, der der Abstrahlcharakteristik 25a zugeordnet ist, Transpondervorrichtungen 74 identifiziert. Die Antennenvorrichtung 50 kann ferner ausgebildet sein, um eine entsprechende Information mittels des Datensignals 58 ausgeben. Die Antennenvorrichtung 50 kann ausgebildet sein, um das Funksignal mit der Abstrahlcharakteristik 25a basierend auf der Erkennung der Transpondervorrichtungen 74 mit einer, verglichen mit der Situation in Fig. 6a, erhöhten Wiederholrate und/oder Zeitdauer auszusenden. Die erhöhte Wiederholrate bzw. Zeitdauer kann zu einem Zeitanteil von zumindest 50 %, zumindest 70 %, zumindest 95 % oder gar 100 % führen, in dem das Funksignal in dem jeweiligen Teilbereich ausgesendet wird.

Alternativ oder zusätzlich kann die Antennenvorrichtung 50 ausgebildet sein, um das Funksignal mit der Abstrahlcharakteristik 25b ebenfalls mit einer erhöhten Wiederholrate oder Zeitdauer auszusenden, etwa da erwartet werden kann, dass sich die Ansammlung 68 und/oder die Transpondervorrichtungen 74 weiterbewegen. Beispielsweise kann das Funksignal mit der Abstrahlcharakteristik 25a in Fig. 6a mit einer ersten Wiederholrate von beispielsweise 1/Sek., 2/Sek. oder einem anderen, beliebigen Wert ausgesendet werden. Alternativ oder zusätzlich kann das Funksignal mit den Abstrahlcharakteristiken 25a-e jeweils für eine Zeitdauer von 0,1 Sek., 0,2 Sek. oder 0,3 Sek. (überlappende Zeitbereiche) ausgesendet werden. Das Funksignal mit der Abstrahlcharakteristik 25a kann in Fig. 6b beispielsweise mit einer Wiederholrate von 10/Sek., 15/Sek. oder einem anderen, gegenüber der Situation in Fig. 6a erhöhten Wert gesendet werden. Alternativ oder zusätzlich kann das Funksignal mit der Abstrahlcharakteristik 25a auch dauerhaft gesendet werden. Die Antennenvorrichtung 50 ist ausgebildet, um das Funksignal mit der Abstrahlcharakteristik 25b gegenüber der Situation in Fig. 6a mit einer erhöhten Wiederholrate und/oder Zeitdauer auszusenden. Der Teilbereich, der der Abstrahlcharakteristik 25a zugeordnet ist, befindet sich bspw. in einem äußeren Bereich des Erfassungsbereichs. In dem daran angrenzenden und der Abstrahlcharakteristik 25b zugeordneten Teilbereich kann darauf folgend eine Ankunft von Transponder-Vorrichtungen erwartet werden. Die Wiederholrate oder Zeitdauer, mit der das Funksignal mit der Abstrahlcharakteristik 25b ausgesendet wird, kann, verglichen mit der Wiederholrate oder Zeitdauer, mit der das Funksignal mit der Abstrahlcharakteristik 25a ausgesendet wird, gleich oder geringer sein.

Fig. 6c zeigt eine Situation, in der sich die Ansammlung 68 der Transpondervorrichtungen gegenüber den Situationen den Fig. 6a und 6b entlang der Bewegungsrichtung 72 weiterbewegt hat, so dass Transpondervorrichtungen 74 basierend auf der Aussendung des Funksignals mit der Abstrahlcharakteristik 25a und 25b in dem jeweiligen Teilbereich antworten. Eine Anzahl von Transpondervorrichtungen, die auf die Aussendung des Funksignals mit der Abstrahlcharakteristik 25a antworten, kann basierend auf der Bewegung der Ansammlung 68 ebenfalls erhöht sein. Die Antennenvorrichtung 50 ist ausgebildet, um entsprechende Informationen mittels des Datensignals 58 auszugeben. Die Antennenvorrichtung 50 ist ferner ausgebildet, um das Funksignal mit der Abstrahlcharakteristik 25c, in der basierend auf der Bewegung Transpondervorrichtungen 74 zukünftig erwartet werden, mit einer erhöhten, ggf. der zweiten, Wiederholrate oder einer erhöhten Zeitdauer auszusenden.

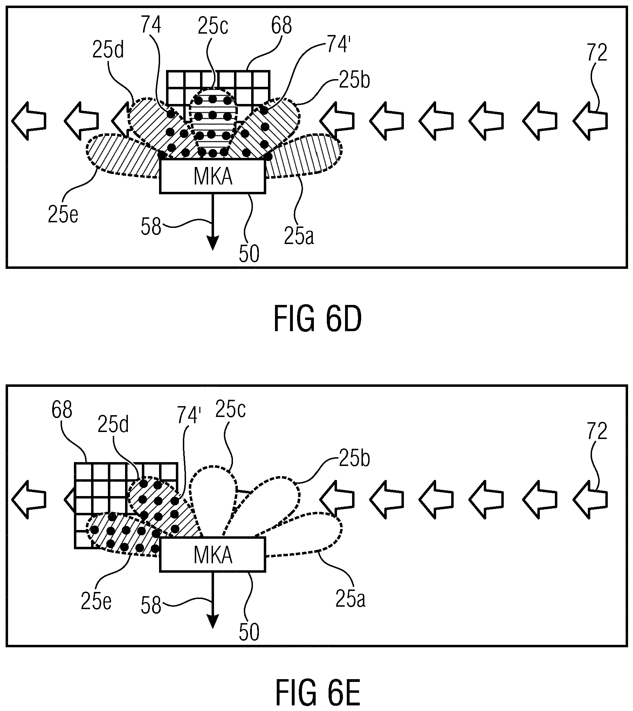

Fig. 6d zeigt eine Situation, in der basierend auf der Aussendung des Funksignals mit jeder der Abstrahlcharakteristiken 25a-e Transpondervorrichtungen 74 ein Antwortsignal senden. Das bedeutet, dass in jedem Teilbereich des Erfassungsbereichs der Antennenvorrichtung 50 Transpondervorrichtungen 74 erfasst werden. Die Antennenvorrichtung 50 ist ausgebildet, um das Funksignal mit den Abstrahlcharakteristiken 25a-e jeweils mit einer gegenüber der Situation der Fig. 6a erhöhten Wiederholrate oder Zeitdauer auszusenden. Ferner ist die Antennenvorrichtung 50 ausgebildet, um mittels des Datensignals 58 auszugeben, dass eine "gesuchte" Transpondervorrichtung 74' in dem Teilbereich, der der Abstrahlcharakteristik 25b zugeordnet ist, erfasst wurde, bzw. dass die Position der Transpondervorrichtung 74' in dem Teilbereich bestimmt wurde. Alternativ oder zusätzlich kann die Antennenvorrichtung 50 ausgebildet sein, um mittels des Datensignals 58 auszugeben, in welchem Teilbereich welche Anzahl von Transpondervorrichtungen 74 erfasst wurden, das heißt deren Position in dem Teilbereich bestimmt wurde.

Fig. 6e zeigt eine Situation, in welcher die Ansammlung 68 basierend auf der Bewegung den Erfassungsbereich der Antennenvorrichtung 50 zumindest teilweise verlassen hat. Eine Aussendung des Funksignals mit den Abstrahlcharakteristiken 25a, 25b und 25c wird von keiner Transpondervorrichtung mit einem Antwortsignal beantwortet. Die Antennenvorrichtung 50 kann ausgebildet sein, um das Funksignal mit den entsprechenden Abstrahlcharakteristiken 25a-c mit einer verringerten, etwa der ersten, Wiederholrate oder Zeitdauer auszusenden. Alternativ oder zusätzlich kann die Antennenvorrichtung 50 auch ausgebildet sein, um die Abstrahlcharakteristik 25a-c bzw. den Teilbereich (Beam) zu deaktivieren, das heißt das Funksignal mit der Abstrahlcharakteristik 25a-c nicht auszusenden. Die Transpondervorrichtung 74' sendet ein entsprechendes Antwortsignal auf eine Aussendung des Funksignals mit der Abstrahlcharakteristik 25b. Die Antennenvorrichtung 50 ist ausgebildet, um mittels des Datensignals 58 eine Bewegungsinformation auszugeben, die eine Information darüber aufweist, dass sich die "aufgesuchte" Transpondervorrichtung 74' von dem Teilbereich, der der Abstrahlcharakteristik 25b zugeordnet ist, hin zu dem Teilbereich, der der Abstrahlcharakteristik 25d zugeordnet ist, bewegt hat. Alternativ oder zusätzlich kann die Antennenvorrichtung 50 ausgebildet sein, um die Bewegungs- oder Positionsinformation auch bezüglich anderer Transpondervorrichtungen auszugeben, gegebenenfalls ohne dass ein Suchauftrag an die Antennenvorrichtung 50 übermittelt worden ist.

Vereinfacht ausgedrückt ist jeder Abstrahlcharakteristik 25a-e ein Teilbereich des Erfassungsbereichs der Antennenvorrichtung 50 zugeordnet. Erfasst die Antennenvorrichtung 50 in einem Teilbereich eine oder mehrere Transpondervorrichtungen 74, so ist die Antennenvorrichtung 50 ausgebildet, um benachbarte Teilbereiche und den Teilbereich, in welchem die Transpondervorrichtung(en) 40 erfasst sind, in einem erhöhten Maße abzufragen, etwa mit einem Anteil von zumindest 50%, zumindest 70% oder 100% einer Zeitdauer (etwa eine Sekunde, zwei Sekunden oder fünf Sekunden). In Fig. 6a erfolgt eine kontinuierliche Beam-Umschaltung und -Abfrage, bis mittels eines der Beams (Teilbereiche bzw. Abstrahlcharakteristiken) ein Transponder erkannt wird. Die Fig. 6b-d zeigen eine erhöhte oder dauerhafte Aktivierung der Beams, in denen Transponder erkannt werden (dauerhaft aktive Beams) oder erwartet werden (zeitweise oder dauerhafte Abfrage des Folge-Beams) sowie eine lediglich gelegentliche Abfrage in den restlichen Teilbereichen (dauerhaft oder zeitweise inaktive Beams). Fig. 6e zeigt eine sukzessive Abschaltung der Beams, bis ein letzter Beam (Abstrahlcharakteristik 25e) in der Reihe keinen Tag mehr erkennt.

In anderen Worten zeigen die Fig. 6a-e ein Prinzipbeispiel einer autonomen Keulenumschaltung gemäß einer wahren Flussrichtung (Bewegungsrichtung 72). Das Beispielszenario zeigt den Fall einer vorbeifahrenden Palette mit einer Menge von Transpondern und die mögliche Zu- und Umschaltung von Speisungen bzw. Richtcharakteristiken (Abstrahlcharakteristiken). Zunächst werden die Richtcharakteristiken nacheinander umgeschaltet, bis bei aktiver Charakteristik nach rechts (Abstrahlcharakteristik 25a) ein oder mehrere Transponder erkannt werden. Mit zunehmender Annäherung der Palette (Ansammlung 68) an die Antenne werden dann auch über weitere Charakteristiken Transponder erkannt. Wenn die Palette die RFID-Mehrkeulenantenne passiert hat, werden über die nach rechts gerichteten Richtcharakteristiken keine Transponder mehr gelesen. Der Begriff "rechts" bezieht sich dabei auf eine Betrachtungsrichtung der Fig. 6a-e und ist bezüglich der Anordnung der Transponder zu der Antennenvorrichtung 50 lediglich beispielhaft und ohne einschränkende Wirkung zu verstehen.

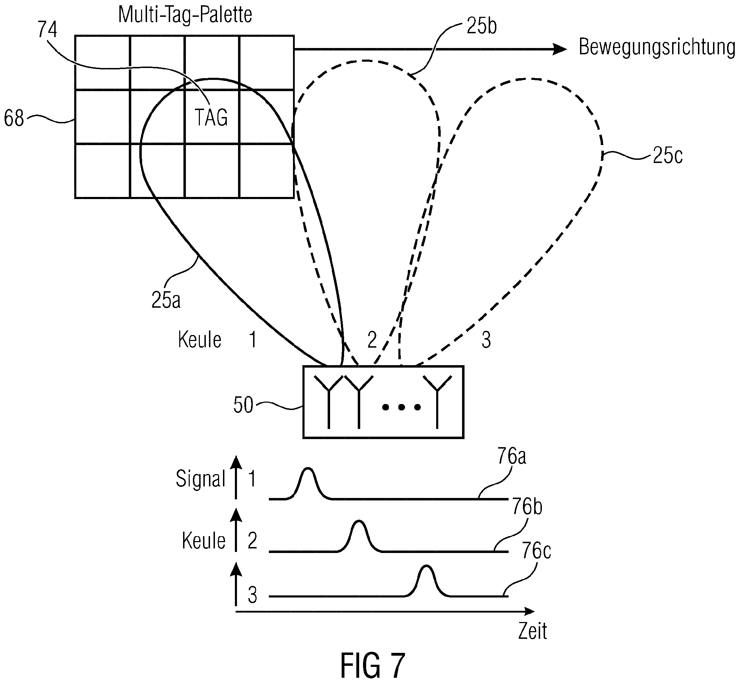

Fig. 7 zeigt ein weiteres beispielhaftes Szenario, bei dem die Antennenvorrichtung 50 ausgebildet ist, um das Funksignal mit drei Abstrahlcharakteristiken 25a-c auszusenden, die drei miteinander überlappenden Teilbereichen zugeordnet sind und als "Keule 1, 2 bzw. 3" angedeutet sind. Ferner zeigt Fig. 7 einen schematischen Verlauf dreier Signale 76a-c, die einer Erfassung von Transpondervorrichtungen in den Teilbereichen der jeweiligen Keule, d.h. des Teilbereichs, zugeordnet sind. Sendet die Transpondervorrichtung 74 und/oder andere Transpondervorrichtungen auf das Funksignal, das mit der Abstrahlcharakteristik 25a gesendet wird, ein Antwortsignal, so wird das Signal 76a erhalten, beispielsweise mittels des internen Funkerkennungs-Lesers der Antennenvorrichtung 50. Eine erhöhte Signalamplitude der Signale 76a-c deutet den Erhalt eines oder mehrerer Antwortsignale an. Zu einem späteren Zeitpunkt wird eine erhöhte Signalamplitude in dem Signal 76b und bezüglich eines weiteren Teilbereichs erhalten. Zu einem demgegenüber späteren Zeitpunkt bzw. Zeitintervall wird eine erhöhte Signalamplitude in dem Signal 76c erhalten, was jeweils die Anwesenheit des oder der Transpondervorrichtungen 74 in dem Teilbereich, der der Abstrahlcharakteristik 25b bzw. 25c zugeordnet ist, andeutet. Mittels eines Vergleichs der Signale 76a-c kann eine Bewegungsrichtung der Transpondervorrichtungen oder der Transpondervorrichtung 74 in dem Erfassungsbereich über die Teilbereiche der Antennenvorrichtung 50 bestimmt werden. Die Signale 76a-c können mittels des Datensignals 58 aus Fig. 5 oder 6 von der Antennenvorrichtung 50 bereitgestellt werden. Alternativ kann bereits die ermittelte Bewegungsrichtung oder eine andere aus den Signalen 76a-c abgeleitete Information, etwa eine Geschwindigkeit bereitgestellt werden.

In anderen Worten zeigt Fig. 7 einen schematischen Zusammenhang zwischen einer Bewegung einer Palette mit mehreren Transpondern und dem Signal gemäß der Identifizierung der Transponder zugeordnet zu den verschiedenen Richtcharakteristiken. Mit der Zuordnung von Transpondern zu einzelnen Richtcharakteristiken kann auch auf die Bewegungsrichtung der Palette geschlossen werden, das heißt, ob sich die Palette entlang einer Richtung (beispielsweise von rechts nach links oder von links nach rechts oder entlang einer anderen Richtung) bewegt. Diese Information kann über eine Schnittstelle für eine weitere Verarbeitung nach außen geführt werden. Damit können logistische Prozesse beeinflusst, optimiert oder weiter automatisiert werden. So kann an einem Tor-Durchgang automatisch bestimmt werden, ob die Palette einen bestimmten Bereich verlässt oder in diesen eintritt. Durch die Zuordnung von Transpondern zu bestimmten Richtcharakteristiken ist weiterhin die Aufnahme einer Trajektorie möglich. Durch die Richtungsauflösung der Transpondersignale und das Umschalten zwischen verschiedenen Richtcharakteristiken (Keulen) 1, 2 und 3, die in unterschiedliche Richtungen ausgeprägt sind, ergeben sich zeitversetzte Signale für die einzelnen Richtcharakteristiken. Damit kann die Geschwindigkeit einer vorbeifahrenden Palette mit Transpondern geschätzt werden, worauf z.B. eine automatische Flusskontrolle basieren kann. Weiterhin ist eine Lokalisierung von Transpondern möglich. Diese kann beispielsweise zur Eigenlokalisierung von Flurförderfahrzeugen oder Ähnlichem dienen, die mit einem Lesegerät und einer Mehrkeulenantenne ausgestattet sind und mit Hilfe von fest installierten Transpondern, beispielsweise innerhalb einer Lagerhalle, automatisch navigieren können.

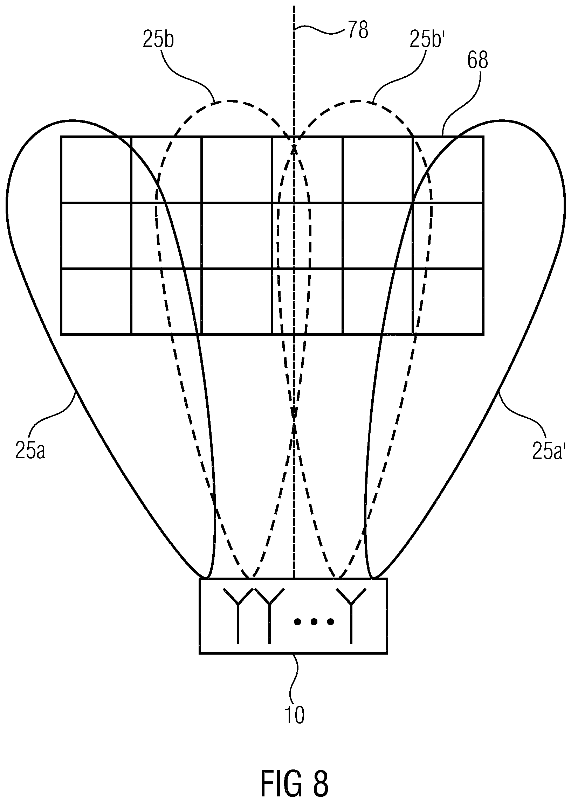

Fig. 8 zeigt eine schematische Darstellung einer Umschaltung zwischen Richtcharakteristiken 25a, 25a', 25b bzw. 26b', wie sie durch die Antennenvorrichtung 10, 20 und/oder eine Logik 42 oder 42' implementiert werden kann. Die Ansammlung 68 umfasst eine gegebenenfalls hohe Anzahl von Transpondervorrichtungen, beispielsweise eine Anzahl von zumindest 100, zumindest 500 oder zumindest 1000. Eine zeitgleiche Aussendung des Funksignals an alle Transpondervorrichtungen der Ansammlung 68 kann zu einer erhöhten Anzahl von Kollisionen der Antwortsignale führen, was zu einer erhöhten Zeitdauer führt, bis alle Transpondervorrichtungen erkannt sind. Eine Aussendung des Funksignals mit verschiedenen Richtcharakteristiken 25a, 25a', 25b und 25b' bzw. in verschiedenen Teilbereichen, die den Abstrahlcharakteristiken zugeordnet sind, kann zu einer erhöhten Erfassungsgeschwindigkeit führen. Beispielsweise wird das Funksignal zuerst in einem Teilbereich ausgesendet, so dass lediglich ein Anteil der Ansammlung 68 von Transpondervorrichtungen ein entsprechendes Antwortsignal sendet. Anschließend kann eine Erfassung in einem anderen Teilbereich erfolgen. Umfasst ein verwendetes Funkprotokoll eine sogenannte Funktion zum Ruhigstellen, das heißt es wird lediglich ein Antwortsignal gesendet, wie etwa bei einem entsprechenden slottet (geschlitzt) Aloha-Protokoll kann auch bei einer Überlappung der Teilbereiche erreicht werden, dass eine Transpondervorrichtung lediglich ein Antwortsignal sendet und so eine Anzahl von Signalkollisionen weiter reduziert ist. Ein derartiges oder auch anders ausgestaltetes Protokoll kann von der jeweiligen Logik implementiert bzw. in dem Speicher der Logik hinterlegt und ggf. von einem internen Funkerkennungs-Leser verändert werden.

Beispielsweise kann zuerst der Teilbereich, der der Abstrahlcharakteristik 25a zugeordnet ist und anschließend der Teilbereich, der der Abstrahlcharakteristik 25a' zugeordnet ist, abgefragt werden. Darauf folgen kann beispielsweise der Teilbereich, der der Abstrahlcharakteristik 25b zugeordnet ist und darauffolgend der Teilbereich, der der Abstrahlcharakteristik 25b' zugeordnet ist, abgefragt werden. Eine so erhaltene "von außen nach innen"-Abfrage ermöglicht, dass auch bei einer Bewegung der Ansammlung 68 eine hohe oder maximale Anzahl von Transpondervorrichtungen identifiziert werden, bevor diese den Erfassungsbereich der Antennenvorrichtung 10 wieder verlassen.

Alternativ kann die Antennenvorrichtung 10 bzw. eine entsprechend ausgeführte oder implementierte Logik auch eine andere Reihenfolge von Abstrahlcharakteristiken und/oder Teilbereichen vorsehen. Ferner können auch mehrere Teilbereiche gleichzeitig abgefragt werden.

In anderen Worten zeigt Fig. 8 ein mögliches Szenario der Umschaltung zwischen verschiedenen Richtcharakteristiken von außen nach innen. Der Wechsel von Richtcharakteristiken kann auf das jeweilige Szenario zugeschnitten werden. Bei Paletten mit sehr vielen Objekten und/oder Transpondern wird das Antwortsignal von verdeckten Transpondern unter Umständen von den Antwortsignalen der anderen Transponder überlagert, womit eine verzögerte Erfassung einhergeht. Mit der Möglichkeit, verschiedene Richtcharakteristiken nutzen zu können, können bei derartigen Szenarien zunächst die äußeren Transponder angeregt, ausgelesen und dann ruhiggestellt werden. Beispielsweise erfolgt dies mittels der Abstrahlung des Funksignals zunächst nacheinander über die Abstrahlcharakteristiken (Keulen) 25a und 25a'. Anschließend wird zu den zweitäußeren Charakteristiken (Keulen) 25b und 25b' gewechselt, um die nächste Sektion auslesen zu können. So lassen sich sukzessive die Transponder auf einer Palette erfassen und die Menge von Kollisionen und damit die Erfassungsdauer verringern.

Alternativ kann die Antennenvorrichtung 10 auch ausgebildet sein, um eine höhere Anzahl von Richtcharakteristiken zu implementieren. Die Richtcharakteristiken können bezüglich einer Mittellinie 78 des Erfassungsbereichs symmetrisch sein, so dass die "von außen nach innen"-Erfassung wie dargestellt symmetrisch bezüglich der Mittellinie 78 und/oder umfassend eine höhere Anzahl von Teilbereichen erfolgen kann.

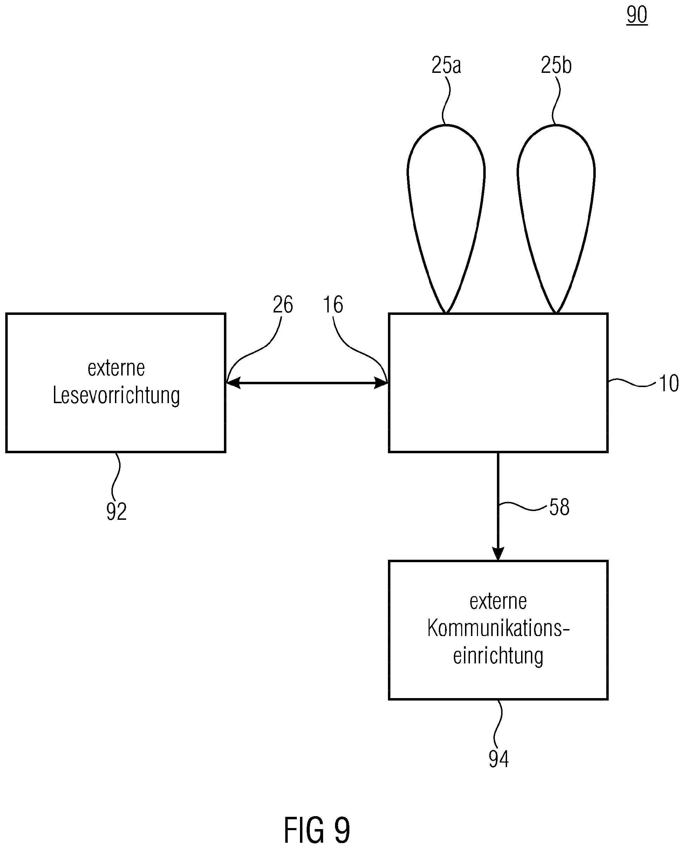

Fig. 9 zeigt ein schematisches Blockschaltbild eines Funkerkennungs-Systems 90 umfassend die Antennenvorrichtung 10, einen externen Funkerkennungs-Leser 92 und die externe Kommunikationseinrichtung 94. Der externe Funkerkennungs-Leser 92 ist ausgebildet, um das Identifikationssignal 16 bereitzustellen und, um das Antwortsignal 26 zu empfangen und auszuwerten.

Die externe Kommunikationseinrichtung 94 kann dauerhaft oder zeitweise mit der Antennenvorrichtung 10 gekoppelt sein, um die entsprechende Reihenfolge der Variation der Abstrahlcharakteristiken 25a und 25b zu bestimmen und/oder in der Antennenvorrichtung 10 zu hinterlegen. Alternativ kann anstelle der Antennenvorrichtung 10 auch die Antennenvorrichtung 20 und/oder eine Antennenvorrichtung umfassend die Berechnungseinrichtung 30, 30' oder die Antennenvorrichtung 50 angeordnet werden.

Ist die entsprechende Vorgehensweise und/oder Reihenfolge der Abstrahlcharakteristiken 25a und 25b dauerhaft in der Antennenvorrichtung hinterlegt, so kann das Funkerkennungs-System 90 die externe Kommunikationseinrichtung 94 auch nicht aufweisen.

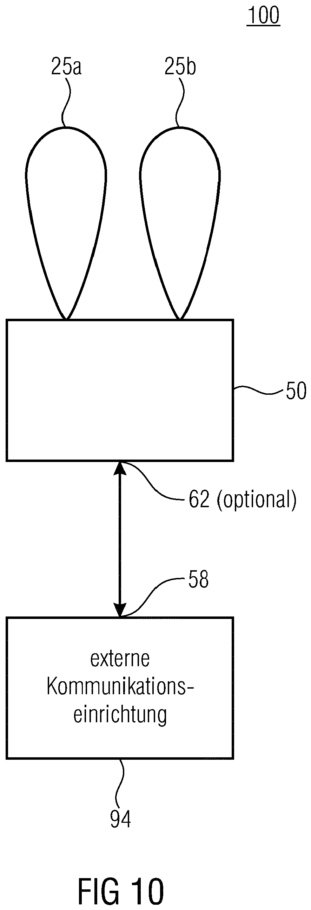

Fig. 10 zeigt ein schematisches Blockschaltbild eines Funkerkennungs-Systems 100 umfassend die Antennenvorrichtung 50 und die externe Kommunikationseinrichtung 94. Die Antennenvorrichtung 50 ist, wie es für Fig. 5 beschrieben ist, ausgebildet, um das Identifikationssignal mittels des internen Funkerkennungs-Leser zu erzeugen und implementiert mithin die Funktionalität des externen Funkerkennungs-Lesers. Die externe Kommunikationseinrichtung 94 ist ausgebildet, um die von der Antennenvorrichtung 50 erhaltene Positionsinformation mittels des Datensignals 58 zu erhalten. Die externe Kommunikationseinrichtung 94 kann ausgebildet sein, um optional das Datensignal 62 der Antennenvorrichtung 50 bereitzustellen, etwa um einen Betriebszustand und/oder einen oder mehrere zu ermittelnde Transponder an die Antennenvorrichtung 50 zu übermitteln oder zu beeinflussen.

Durch vorangehend beschriebene Ausführungsbeispiele können eine Reihe von Vorteilen erhalten werden. So kann eine Antennenvorrichtung (RFID-Mehrkeulenantenne) mit einem Lesegerät verwendet werden, dass nur einen Antennenanschluss besitzt. Für das oder die externen Lesegeräte kann eine transparente Interaktion mit den Transpondern erfolgen, das bedeutet, die externen Lesegeräte können ohne weitere Modifikation mit Antennenvorrichtungen gemäß vorangehend beschriebener Ausführungsbeispiele ausgestattet werden. Der Wechsel zwischen den Abstrahlcharakteristiken (Richtcharakteristiken) kann an verschiedene Situationen angepasst werden. Der Wechsel kann beispielsweise zufällig, sequentiell, von außen nach innen oder in einer beliebigen anderen Reihenfolge erfolgen.

Die Antennen der Abstrahleinrichtung erfordern keine verteilte Anordnung für die Abstrahlung des Funksignals in verschiedenen Teilbereichen, sondern können lokal bzw. kompakt angeordnet sein. Dies ermöglicht eine kompakte Leseeinheit mit Lesegerät und RFID-Mehrkeulenantenne. Ein externer Funkerkennungs-Leser mit mehreren Antennenanschlüssen kann mit mehreren RFID-Mehrkeulenantennen gemäß vorangehender Ausführungsbeispiele verbunden werden. Ein einzelner Funkerkennungs-Leser kann dadurch in einem größeren Raumbereich agieren. Durch unterschiedliche Ausrichtungen der RFID-Mehrkeulenantennen kann mit einem einzelnen Lesegerät (Funkerkennungs-Leser) eine zwei- oder dreidimensionale Ausleuchtung des Erfassungsbereichs erfolgen.

Durch die Identifikation der Transponder innerhalb der RFID-Mehrkeulenantenne und die Bereitstellung der Informationen bezüglich der Zuordnung von Transpondern und der Richtcharakteristik über eine Schnittstelle ergeben sich ebenfalls Vorteile. Dazu gehören, dass bei bewegten Objekten mit Transpondern die Bewegungsrichtung und die geschätzte Relativgeschwindigkeit ermittelt werden kann. Bei Tor-Durchfahrten der Transponder kann somit automatisch ermittelt werden, ob Objekte einen Bereich verlassen oder in diesen eintreten. Dies ermöglicht die automatische An- oder Abmeldung von Objekten in der elektronischen Verwaltung, Produktionsumgebungen oder Ähnlichem. Bei sicherheitsrelevanten Anwendungen kann außerdem erkannt werden, wenn ein Objekt ungewollt ein bestimmtes Areal verlässt oder in dieses eintritt. Innerhalb von Verfahreinheiten kann die Flusskontrolle automatisch geregelt bzw. an die geschätzte Relativgeschwindigkeit angepasst werden. Ferner können Transponder lokalisiert, d.h. einem Teilbereich zugeordnet werden. Objekte mit Transpondern können damit aufgefunden bzw. deren Position kann für weitere Logistikprozesse in die elektronischen Verwaltungen aufgenommen werden. Flurförderfahrzeuge können autonom navigieren, wenn sie mit einer Leseeinheit bestehend aus Lesegerät und RFID-Mehrkeulenantenne ausgestattet sind und im Bewegungsbereich Transponder (zur Positionserkennung) fest installiert sind. Darüber hinaus kann eine Schnittstelle zur Übermittlung der Informationen sowohl drahtgebunden als auch drahtlos ausgeführt sein. Bei einer drahtgebundenen Schnittstelle kann die RFID-Mehrkeulenantenne in ein bestehendes drahtgebundenes Bus-System oder in ein drahtgebundenes Netzwerk integriert werden und somit mit einer Kontrolleinheit kommunizieren. Die Kontrolleinheit (externe Kommunikationseinrichtung) kann dabei örtlich getrennt von der RFID-Mehrkeulenantenne sein, etwa an einem anderen Standort, wobei die Kommunikation über einen Internetanschluss erfolgen kann. Bei einer drahtlosen Schnittstelle kann die RFID-Mehrkeulenantenne in ein bestehendes drahtloses Netzwerk integriert werden und somit mit einer Kontrolleinheit kommunizieren oder über eine ad-hoc-Schnittstelle (etwa Bluetooth) mit der Kontrolleinheit kommunizieren. Die Kontrolleinheit kann dabei örtlich getrennt von der RFID-Mehrkeulenantenne sein, etwa an einem anderen Standort, wobei die Kommunikation über Mobilfunk erfolgen kann.

Anwendungsbereiche vorangehend beschriebener Ausführungsbeispiele sind beispielsweise der Bereich der Logistik und dort die Verwaltung von Objekten innerhalb von Lagerhallen und/oder Produktionsumgebungen, im Bereich einer autonomen Navigation von Flurförderfahrzeugen und/oder einer Warenverfolgung. Darüber hinaus können Ausführungsbeispiele im Bereich der Produktion eingesetzt werden, etwa beim Verwalten von Werkstücken und/oder Werkstückträgern sowie für eine autonome Navigation von Flurförderfahrzeugen.

Ausführungsbeispiele umfassen somit ein Prinzip einer RFID-Mehrkeulenantenne zur hochfrequenten Identifizierung, d.h. zum Auslesen von (passiven) RFID-Transpondern, die mit einem einzelnen Anschluss für das Lesegerät auskommt. Die Mehrkeulenantenne besteht bspw. aus einer Menge von Antennen, die an ein Speisenetzwerk angeschlossen sind. Mit dem Speisenetzwerk können verschiedene Speisungen der Antennen realisiert werden, so dass sich verschiedene Richtcharakteristiken ausprägen. Welche Speisung zu einem bestimmten Zeitpunkt genutzt wird, kann die Mehrkeulenantenne autonom festlegen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literatur

[1] L. Weisgerber, A.E. Popugaev, "Multibeam antenna array for RFID applications." in Proc. Of the 43rd European Microwave, Conference (EuMC), Nuremberg, Germany, 6-10 Oct. 2013, pp. 84-87.

## Patentansprüche

1. Antennenvorrichtung (10; 20; 50) mit folgenden Merkmalen:
einer Abstrahleinrichtung (14) umfassend eine Mehrzahl von Antennen (22a-c), die ausgebildet ist, um ein Funksignal (24) mit einer Abstrahlcharakteristik (25a-e) auszusenden; und
einer Berechnungseinrichtung (12; 30; 30'; 32; 47) die ausgebildet ist, um basierend auf einem bereitgestellten Identifikationssignal (16) eine Mehrzahl von Speisesignalen (18a-c; b₁-b_{N}) zu erzeugen und an die Mehrzahl von Antennen (22a-c) anzulegen, um das Funksignal (24) zu erzeugen;
wobei die Berechnungseinrichtung (12; 30; 30'; 32; 47) ferner ausgebildet ist, um die Speisesignale (18a-c; b₁-b_{N}) zeitvariant zu steuern, um das Funksignal (24) mit einer zeitvarianten Abstrahlcharakteristik (25a-c) auszusenden; und
wobei die Berechnungseinrichtung (12; 30; 30'; 32; 47) einen Anschluss (28) aufweist und ausgebildet ist, um das Identifikationssignal (16) von einem externen Funkerkennungs-Leser (92) an dem Anschluss (28) zu erhalten.

2. Antennenvorrichtung gemäß Anspruch 1, bei der die Berechnungseinrichtung (30; 30'; 32; 47) einen Speicher (43) aufweist, der ausgebildet ist, um eine Information bezüglich einer zeitlichen Abfolge einer Änderung der zeitvarianten Abstrahlcharakteristik (25a-c) zu speichern.

3. Antennenvorrichtung gemäß Anspruch 1 oder 2, bei der die Berechnungseinrichtung (12; 30; 30'; 32; 47) ausgebildet ist, um die Speisesignale (18a-c; b₁-b_{N}) zu steuern, so dass das Funksignal (24) mit einer aus einer Mehrzahl von Abstrahlcharakteristiken (25a-e) gesendet wird, wobei jeder Abstrahlcharakteristik (25a-e) ein Teilbereich eines Erfassungsbereichs der Antennenvorrichtung (10; 20; 50) zugeordnet ist.

4. Antennenvorrichtung gemäß einem der vorangehenden Ansprüche, bei der die Mehrzahl von Antennen (22a-c) eine voneinander verschiedene Abstrahlcharakteristik (25a-e) aufweisen, wobei die Berechnungseinrichtung (12; 30; 30'; 32; 47) jeweils ausgebildet ist, um ein Speisesignal (18a-c; b₁-b_{N}) aus dem Identifikationssignal (16) abzuleiten, und so an die Mehrzahl von Antennen (22a-c) anzulegen, dass eine erste Abstrahlcharakteristik (25a-c) einer Mehrzahl von möglichen Abstrahlcharakteristiken der Mehrzahl von Antennen (22a-c) erhalten wird und wobei eine zweite Abstrahlcharakteristik (25a-c) der Mehrzahl von möglichen Abstrahlcharakteristiken nicht erhalten wird.

5. Antennenvorrichtung gemäß einem der vorangehenden Ansprüche, bei der die Berechnungseinrichtung (12; 30; 30'; 32; 47) ausgebildet ist, um eine Mehrzahl von Speisesignalen (18a-c; b₁-b_{N}) an die Mehrzahl von Antennen (22-ac) anzulegen, so dass diese aus der Mehrzahl von Speisesignalen (18a-c; b₁-b_{N}) eine Mehrzahl von einander überlagernden Funksignalen erzeugen, wobei die Überlagerung die Abstrahlcharakteristik (25a-c) aufweist, wobei die Berechnungseinrichtung (12; 30; 30'; 32; 47) ausgebildet ist, um die Mehrzahl von Speisesignalen (18a-c; b₁-b_{N}) so zu steuern, dass die erzeugte Überlagerung eine zeitvariante Abstrahlcharakteristik (25a-e) aufweist.

6. Antennenvorrichtung gemäß einem der vorangehenden Ansprüche, bei der die Berechnungseinrichtung (30; 30'; 32; 47) folgendes umfasst:
einen steuerbaren Verteiler (34; 52), der ausgebildet ist, um das Identifikationssignal (16) an einem Signaleingang (36) zu empfangen und um ein Ansteuersignal (a₁-a_{N}), das auf dem Identifikationssignal (16) basiert, an einem aus einer Mehrzahl von Signalausgängen (38-1-38-n; 64a-b) bereitzustellen;
einen Keulenformer (46) mit einer Mehrzahl von Signaleingängen (48-1-48-n), wobei die Mehrzahl von Signaleingänge (48-1-48-n) jeweils mit einem Signalausgang (38-1-38-n; 64a-b) des Verteilers gekoppelt sind und ausgebildet sind, um ein Ansteuersignal (a₁-a_{N}) zu empfangen, wobei der Keulenformer (46) ausgebildet ist, um basierend auf einem empfangenen Ansteuersignal (a₁-a_{N}) Speisesignale (18a-c; b₁-b_{N}) an Signalausgängen bereitzustellen, wobei jedes Speisesignal (18a-c; b₁-b_{N}) einer Antenne (22a-c) der Abstrahleinrichtung (14) zugeordnet ist und wobei jedem Signaleingang (48a-n) des Keulenformers eine Abstrahlcharakteristik (25a-e) des Funksignals (24) an der Abstrahleinrichtung (14) zugeordnet ist;
einer Verteilersteuerung (42; 42'), die ausgebildet ist, um den steuerbaren Verteiler (34; 52) zeitvariant zu steuern, so dass der steuerbare Verteiler (34; 52) das Ansteuersignal (a₁-a_{N}) an zeitvariant veränderlichen Signalausgängen (38-1-38-n; 64ab) oder mit einer zeitvarianten Signalcharakteristik (α-αₙ; φ₁- φₙ; w₁-w₆) ausgibt;

7. Antennenvorrichtung gemäß einem der vorangehenden Ansprüche, bei der die Abstrahleinrichtung (14) ausgebildet ist, um ein Antwortsignal (26), das auf das Funksignal (24) hin von einer Transpondervorrichtung (74, 74') gesendet wird, zu empfangen und bei der die Berechnungseinrichtung (47) ausgebildet ist, um basierend auf einer Auswertung des Antwortsignals (26) und der Abstrahlcharakteristik (25a-e), mit der das Funksignal (24) gesendet worden ist, eine Anwesenheit der Transpondervorrichtung (74, 74') in einem Teilbereich eines Erfassungsbereichs der Abstrahleinrichtung (14) zu bestimmen, wobei der Teilbereich der Abstrahlcharakteristik (25a-e) zugeordnet ist und wobei die Berechnungseinrichtung (47) ferner ausgebildet ist, um eine Positionsinformation, die die Anwesenheit der Transpondervorrichtung (74, 74') in dem Teilbereich anzeigt, an einem Signalausgang bereitzustellen (58).

8. Antennenvorrichtung gemäß Anspruch 7, bei der die Berechnungseinrichtung (47) ausgebildet ist, um eine Bewegungsinformation (76a-c) bereitzustellen, die eine Bewegung (72) der Transpondervorrichtung (74) von dem Teilbereich in den anderen Teilbereich anzeigt, wenn die Anwesenheit der Transpondervorrichtung (74, 74') zuerst in dem Teilbereich und darauf folgend in dem anderen Teilbereich bestimmt ist.

9. Antennenvorrichtung gemäß Anspruch 7 oder 8, bei der die Berechnungseinrichtung (47) einen internen Funkerkennungs-Leser (54) zum Auswerten des Antwortsignals (26) umfasst, der ausgebildet ist, um die Anwesenheit der Transpondervorrichtung (74, 74'), die das Antwortsignal (26) auf das Funksignal (24) hin gesendet hat, mit dem Teilbereich zu korrelieren, wobei die Berechnungseinrichtung (50) ausgebildet ist, um die Abstrahlcharakteristik (25a-e) des Funksignals (24) so zu steuern, dass das Funksignal (24) in einem folgenden Zeitintervall mit einer Abstrahlcharakteristik (25a-e) ausgesendet wird, die einem anderen Teilbereich zugeordnet ist.

10. Antennenvorrichtung gemäß Anspruch 9, bei der die Berechnungseinrichtung (47) ausgebildet ist, um die Speisesignale (18a-c) so bereitzustellen, dass in einem ersten Zeitintervall das Funksignal (24) mit einer ersten Abstrahlcharakteristik (25a-e) gesendet wird und in einem zweiten Zeitintervall, das auf das erste Zeitintervall folgt, mit einer zweiten Abstrahlcharakteristik (25a-e) gesendet wird
wobei der interne Funkerkennungs-Leser (54) ausgebildet ist, um ein erstes Antwortsignal (26) mit einem ersten Teilbereich, der der ersten Abstrahlcharakteristik (25a-e) zugeordnet ist, zu korrelieren, und um ein zweites Antwortsignal (26) mit einem zweiten Teilbereich, der der zweiten Abstrahlcharakteristik (25a-e) zugeordnet ist, zu korrelieren,
wobei die Berechnungseinrichtung (47) ausgebildet ist, um ein Positionssignal (58; 76a-c) bereitzustellen, das Informationen über eine Anwesenheit einer Transpondervorrichtung (74, 74'), die das Antwortsignal (26) sendet, in dem ersten Teilbereich während des ersten Zeitintervalls und in dem zweiten Teilbereich während des zweiten Zeitintervalls aufweist.

11. Antennenvorrichtung gemäß Anspruch 10,
bei der die Berechnungseinrichtung (47) ausgebildet ist, um:
in dem ersten Zeitintervall eine Anwesenheit zumindest einer Transpondervorrichtung (74, 74') in einem ersten Teilbereich eines Erfassungsbereichs der Antennenvorrichtung (50) basierend auf dem Antwortsignal (26) zu bestimmen und um die Abstrahlcharakteristik (25a-e) so zu steuern, dass das Funksignal (24) zumindest mit einem Zeitanteil von 50 % mit einer dem ersten Teilbereich zugeordneten ersten Abstrahlcharakteristik (25a) gesendet wird und so dass das Funksignal (24) zumindest zeitweise mit einer einem zweiten Teilbereich des Erfassungsbereichs, der benachbart zum ersten Teilbereich (25a) in dem Erfassungsbereich angeordnet ist, zugeordneten Abstrahlcharakteristik (25b) ausgesendet wird;
in einem zweiten Zeitintervall, das auf das erste Zeitintervall folgt, eine Anwesenheit der zumindest einen Transpondervorrichtung (74, 74') in dem zweiten Teilbereich zu bestimmen und um die Abstrahlcharakteristik so zu steuern, dass das Funksignal zumindest mit einem Zeitanteil von 50 % mit einer dem zweiten Teilbereich zugeordneten zweiten Abstrahlcharakteristik (25b) gesendet wird und so dass das Funksignal (24) zumindest zeitweise mit der dem ersten Teilbereich zugeordneten ersten Abstrahlcharakteristik (25a) ausgesendet wird, wenn die Berechnungseinrichtung (47) die Anwesenheit einer Transpondervorrichtung (74, 74') in dem ersten Teilbereich nicht bestimmt;
wobei die Berechnungseinrichtung (47) ausgebildet ist, um das Positionssignal (58; 76a-c) in dem ersten und zweiten Zeitintervall so bereitzustellen, dass eine Bewegungsrichtung (72) der zumindest einen Transpondervorrichtung (74, 74') in dem Empfangsbereich basierend auf einer zeitlichen Abfolge (76a-c) der Teilbereiche, in denen die Transpondervorrichtung (74, 74') bestimmt wird, ermöglicht ist.

12. Antennenvorrichtung gemäß einem der vorangehenden Ansprüche, die ferner einen Steuersignaleingang (59) zum Empfangen eines Steuersignals (62) umfasst, wobei die Berechnungseinrichtung (47) ausgebildet ist, um basierend auf dem Steuersignal (62) eine zeitliche Folge einer Änderung der Abstrahlcharakteristik (25a-e) zu bestimmen und um die Abstrahlcharakteristik (25a-e) basierend auf der zeitlichen Folge zu ändern.

13. Funkerkennungssystem (100) mit:
einer Antennenvorrichtung (50) gemäß einem der Ansprüche 9-12; und
einer Kommunikationseinrichtung (94) zum Empfangen eines Datensignals, das Informationen bezüglich einer Position einer von der Antennenvorrichtung (50) erfassten Transpondervorrichtung (74, 74') aufweist.

14. Funkerkennungssystem (90) mit:
einem externen Funkerkennungs-Leser (92);
einer Antennenvorrichtung (10; 20; 50) gemäß einem der Ansprüche 1-12; und
einer Kommunikationseinrichtung (94) zum Bereitstellen eines Steuersignals, das Informationen bezüglich einer zeitlichen Abfolge der Abstrahlcharakteristik, mit der das Funksignal ausgesendet wird, aufweist.

15. Verfahren mit folgenden Schritten
Erhalten eines Identifikationssignals (16) von einem externen Funkerkennungs-Leser (92) an einem Anschluss (28);
Aussenden eines Funksignals (24) mit einer Abstrahleinrichtung (14) umfassend eine Mehrzahl von Antennen (22a-c), umfassend eine Abstrahlcharakteristik (25a-e);
Erzeugen einer Mehrzahl von Speisesignalen (18a-c; b₁-b_{N}) basierend auf dem Identifikationssignal (16) und Anlegen der Speisesignale (18a-c; b₁-b_{N}) an die Mehrzahl von Antennen (22a-c), um das Funksignal zu erzeugen; und
zeitvariantes Steuern der Speisesignale (18a-c; b₁-b_{N}), so dass das Funksignal (24) mit einer zeitvarianten Abstrahlcharakteristik (25a-e) ausgesendet wird.

## Claims

1. An antenna device (10; 20; 50) comprising:
radiating means (14) comprising a plurality of antennas (22a-c), configured to emit a radio signal (24) with a radiation pattern (25a-e); and
calculating means (12; 30; 30'; 32; 47) configured to generate and apply to the plurality of antennas (22a-c) a plurality of feed signals (18a-c; b₁-b_{N}) based on an identification signal (16) provided in order to generate the radio signal (24);
wherein the calculating means (12; 30; 30'; 32; 47) is further configured to control the feed signals (18a-c; b₁-b_{N}) in a time-varying manner so that the radio signal (24) is emitted with a time-varying radiation pattern (25a-c); and
wherein the calculating means (12; 30; 30'; 32; 47) comprises a terminal (28) and is configured to obtain the identification signal (16) from an external radio identification reader (92) at the terminal (28).

2. The antenna device in accordance with claim 1, wherein the calculating means (30; 30'; 32; 47) comprises a storage (43) configured to store information relating to a temporal succession of a change in the time-varying radiation pattern (25a-c).

3. The antenna device in accordance with claim 1 or 2, wherein the calculating means (12; 30; 30'; 32; 47) is configured to control the feed signals (18a-c; b₁-b_{N}) such that the radio signal (24) is transmitted with one of a plurality of radiation patterns (25a-e), each radiation pattern (25a-e) being associated to a sub-region of a detection region of the antenna device (10; 20; 50).

4. The antenna device in accordance with any of the preceding claims, wherein the plurality of antennas (22a-c) comprise mutually different radiation patterns (25a-e), wherein the calculating means (12; 30; 30'; 32; 47) is configured to derive a feed signal (18a-c; b₁-b_{N}) from the identification signal (16) and apply same to the plurality of antennas (22a-c) such that a first radiation pattern (25a-c) of a plurality of possible radiation patterns of the plurality of antennas (22a-c) is obtained, wherein a second radiation pattern (25a-c) of the plurality of possible radiation patterns is not obtained.

5. The antenna device in accordance with any of the preceding claims, wherein the calculating means (12; 30; 30'; 32; 47) is configured to apply a plurality of feed signals (18a-c; b₁-b_{N}) to the plurality of antennas (22a-c) such that these generate a plurality of mutually superimposing radio signals from the plurality of feed signals (18a-c; b₁-b_{N}), superimposing comprising the radiation pattern (25a-c), wherein the calculating means (12; 30; 30'; 32; 47) is configured to control the plurality of feed signals (18a-c; b₁-b_{N}) such that the superimposing generated comprises a time-varying radiation pattern (25a-e).

6. The antenna device in accordance with any of the preceding claims, wherein the calculating means (30; 30'; 32; 47) further comprises:
a controllable distributor (34; 52) configured to receive the identification signal (16) at a signal input (36) and to provide a drive signal (a₁-a_{N}) which is based on the identification signal (16) at one of a plurality of signal outputs (38-1-38-n; 64a-b);
a beam shaper (46) comprising a plurality of signal inputs (48-1-48-n), wherein the plurality of signal inputs (48-1-48-n) are each coupled to a signal output (38-1-38-n; 64a-b) of the distributor and configured to receive a drive signal (a₁-a_{N}), wherein the beam-shaper (46) is configured to provide feed signals (18a-c; b₁-b_{N}) at signal outputs based on a drive signal (a₁-a_{N}) received, wherein each feed signal (18a-c; b₁-b_{N}) is associated to an antenna (22a-c) of the radiating means (14), and wherein a radiation pattern (25a-e) of the radio signal (24) at the radiating means (14) is associated to each signal input (48a-n) of the beam shaper;
a distributor controller (42; 42') configured to control the controllable distributor (34; 52) in a time-varying manner so that the controllable distributor (34; 52) outputs the drive signal (a₁-a_{N}) at time-varyingly changing signal outputs (38-1-38-n; 64a-b) or with a time-varying signal characteristic (α-αₙ; Φ₁ - Φ_{n;} w₁-w₆).

7. The antenna device in accordance with any of the preceding claims, wherein the radiating means (14) is configured to receive a response signal (26) transmitted by a transponder device (74, 74') responsive to the radio signal (24), and wherein the calculating means (47) is configured to determine, based on evaluating the response signal (26) and the radiation pattern (25a-e) with which the radio signal (24) has been transmitted, a presence of the transponder device (74, 74') in a sub-region of a detection region of the radiating means (14), wherein the sub-region is associated to the radiation pattern (25a-e), and wherein the calculating means (47) is additionally configured to provide position information indicating the presence of the transponder device (74, 74') in the sub-region, at a signal output (58).

8. The antenna device in accordance with claim 7, wherein the calculating means (47) is configured to provide movement information (76a-c) indicating a movement (72) of the transponder device (74) from the sub-region to the other sub-region when the presence of the transponder device (74, 74') is determined at first to be in the sub-region and, subsequently, in the other sub-region.

9. The antenna device in accordance with claim 7 or 8, wherein the calculating means (47) comprises an internal radio identification reader (54) for evaluating the response signal (26) configured to correlate the presence of the transponder device (74, 74') which has transmitted the response signal (26) responsive to the radio signal (24), with the sub-region, wherein the calculating means (50) is configured to control the radiation pattern (25a-e) of the radio signal (24) such that the radio signal (24), in a subsequent time interval, is emitted with a radiation pattern (25a-e) associated to another sub-region.

10. The antenna device in accordance with claim 9, wherein the calculating means (47) is configured to provide the feed signals (18a-c) such that, in a first time interval, the radio signal (24) is transmitted with a first radiation pattern (25a-e) and, in a second time interval which follows the first interval, is transmitted with a second radiation pattern (25a-e),
wherein the internal radio identification reader (54) is configured to correlate a first response signal (26) with a first sub-region associated to the first radiation pattern (25a-e) and to correlate a second response signal (26) with a second sub-region associated to the second radiation pattern (25a-e),
wherein the calculating means (47) is configured to provide a position signal (58; 76a-c) comprising information on a presence of a transponder device (74, 74') which transmits the response signal (26), in the first sub-region during the first time interval and, during the second time interval, in the second sub-region.

11. The antenna device in accordance with claim 10,
wherein the calculating means (47) is configured:
to determine, in the first time interval, a presence of at least one transponder device (74, 74') in a first sub-region of a detection region of the antenna device (50) based on the response signal (26) and to control the radiation pattern (25a-e) such that the radio signal (24) is transmitted with a first radiation pattern (25a) associated to the first sub-region at least with a time slice of 50% and such that the radio signal (24) is emitted, at least occasionally, with a radiation pattern (25b) associated to a second sub-region of the detection region which is arranged adjacent to the first sub-region (25a) in the detection region;
to determine, in a second time interval which follows the first time interval, a presence of the at least one transponder device (74, 74') in the second sub-region and to control the radiation pattern such that the radio signal is transmitted with a second radiation pattern (25b) associated to the second sub-region at least with a time slice of 50% and such that the radio signal (24) is emitted, at least occasionally, with the first radiation pattern (25a) associated to the first sub-region when the calculating means (47) does not determine the presence of a transponder device (74, 74') in the first sub-region;
wherein the calculation means (47) is configured to provide the position signal (58; 76a-c) in the first and second time intervals such that a direction of movement (72) of the at least one transponder device (74, 74') in the receive region is allowed based on a temporal succession (76a-c) of the sub-region in which the transponder device (74, 74') is determined to be.

12. The antenna device in accordance with any of the preceding claims, further comprising a control signal input (59) for receiving a control signal (62), wherein the calculating means (47) is configured to determine a temporal succession of a change in the radiation pattern (25a-e) based on the control signal (62) and to change the radiation pattern (25a-e) based on the temporal succession.

13. A radio identification system (100) comprising:
an antenna device (50) in accordance with any of claims 9-12; and
communicating means (94) for receiving a data signal comprising information relating to a position of a transponder device (74, 74') detected by the antenna device (50).

14. A radio identification system (90) comprising:
an external radio identification reader (92);
an antenna device (10; 20; 50) in accordance with any of claims 1-12; and
communicating means (94) for providing a control signal comprising information relating to a temporal succession of the radiation pattern with which the radio signal is transmitted.

15. A method comprising the steps of:
obtaining an identification signal (16) from an external radio identification reader (92) at a terminal (28);
emitting a radio signal (24) which comprises a radiation pattern (25a-e) using radiating means (14) comprising a plurality of antennas (22a-c);
generating a plurality of feed signals (18a-c; b₁-b_{N}) based on the identification signal (16) and applying the feed signals (18a-c; b₁-b_{N}) to the plurality of antennas (22a-c) in order to generate the radio signal; and
time-varyingly controlling the feed signals (18a-c; b₁-b_{N}) so that the radio signal (25) is emitted with a time-varying radiation pattern (25a-e).

## Revendications

1. Dispositif d'antenne (10; 20; 50) aux caractéristiques suivantes:
un moyen d'émission (14) comprenant une pluralité d'antennes (22a à c) qui sont conçues pour émettre un signal radio (24) avec une caractéristique d'émission (25a à e); et
un moyen de calcul (12; 30; 30'; 32; 47) qui est conçu pour générer, sur base d'un signal d'identification mis à disposition (16), une pluralité de signaux d'alimentation (18a à c; b₁ à b_{N}) et pour les appliquer à la pluralité d'antennes (22a à c) pour générer le signal radio (24);
dans lequel le moyen de calcul (12; 30; 30'; 32; 47) est par ailleurs conçu pour commander les signaux d'alimentation (18a à c; b₁ à b_{N}) de manière variable dans le temps, pour émettre le signal radio (24) avec une caractéristique d'émission variable dans le temps (25a à c); et
dans lequel le moyen de calcul (12; 30; 30'; 32; 47) comporte une connexion (28) et est conçu pour obtenir le signal d'identification (16) d'un lecteur d'identification par radio externe (92) à la connexion (28).

2. Dispositif d'antenne selon la revendication 1, dans lequel le moyen de calcul (30; 30'; 32; 47) présente une mémoire (43) qui est conçue pour mémoriser une information relative à une séquence temporelle d'une modification de la caractéristique d'émission variable dans le temps (25a à c).

3. Dispositif d'antenne selon la revendication 1 ou 2, dans lequel le moyen de calcul (12; 30; 30'; 32; 47) est conçu pour commander les signaux d'alimentation (18a à c; b₁ à b_{N}) de sorte que le signal radio (24) soit envoyé avec l'une parmi une pluralité de caractéristiques d'émission (25a à e), dans lequel à chaque caractéristique d'émission (25a à e) est associée une zone partielle d'une zone de détection du dispositif d'antenne (10; 20; 50).

4. Dispositif d'antenne selon l'une des revendications précédentes, dans lequel la pluralité d'antennes (22a à c) présentent une caractéristique d'émission (25a à e) différente l'une de l'autre, dans lequel le moyen de calcul (12; 30; 30'; 32; 47) est chaque fois conçu pour dériver un signal d'alimentation (18a à c; b₁ à b_{N}) du signal d'identification (16) et pour l'appliquer à la pluralité d'antennes (22a à c) de sorte que soit obtenue une première caractéristique d'émission (25a à c) parmi une pluralité de caractéristiques d'émission possibles de la pluralité d'antennes (22a à c) et dans lequel n'est pas obtenue une deuxième caractéristique d'émission (25a à c) parmi la pluralité de caractéristiques d'émission possibles.

5. Dispositif d'antenne selon l'une des revendications précédentes, dans lequel le moyen de calcul (12; 30; 30'; 32; 47) est conçu pour appliquer une pluralité de signaux d'alimentation (18a à c; b₁ à b_{N}) à la pluralité d'antennes (22a à c), de sorte que ces dernières génèrent à partir de la pluralité de signaux d'alimentation (18a à c; b₁ à b_{N}) une pluralité de signaux radio qui se recouvrent, dans lequel le recouvrement présente la caractéristique d'émission (25a à c), dans lequel le moyen de calcul (12; 30; 30'; 32; 47) est conçu pour commander la pluralité de signaux d'alimentation (18a à c; b₁ à b_{N}) de sorte que le recouvrement généré présente une caractéristique d'émission variable dans le temps (25a à e).

6. Dispositif d'antenne selon l'une des revendications précédentes, dans lequel le moyen de calcul (30; 30'; 32; 47) comporte:
un distributeur pouvant être commandé (34; 52) qui est conçu pour recevoir le signal d'identification (16) à une entrée de signal (36) et pour mettre un signal d'activation (a₁ à a_{N}) qui est basé sur le signal d'identification (16) à disposition à l'une parmi une pluralité de sorties de signal (38-1 à 38-n; 64a à b);
un formateur de lobes (46) avec une pluralité d'entrées de signal (48-1 à 48-n), où chacune de la pluralité d'entrées de signal (48-1 à 48-n) est couplée à une sortie de signal (38-1 à 38-n; 64a à b) du distributeur et est conçue pour recevoir un signal d'activation (a₁ à a_{N}), où le formateur de lobes (46) est conçu pour mettre à disposition, sur base d'un signal d'activation reçu (a₁ à a_{N}), des signaux d'alimentation (18a à c; b₁ à b_{N}) aux sorties de signal, où chaque signal d'alimentation (18a à c; b₁ à b_{N}) d'une antenne (22a à c) est associé au moyen d'émission (14) et où à chaque entrée de signal (48a à n) du formateur de lobes est associée une caractéristique d'émission (25a à e) du signal radio (24) au dispositif d'émission (14);
une commande de distributeur (42; 42') qui est conçue pour commander le distributeur pouvant être commandé (34; 52) de manière variable dans le temps de sorte que le distributeur pouvant être commandé (34; 52) sorte le signal de commande (a₁ à a_{N}) à des sorties de signaux variables de manière variable dans le temps (38-1 à 38-n; 64a à b) ou avec une caractéristique de signal variable dans le temps (*α* - *aₙ*; *Φ*₁ - *Φₙ*; *W*₁ - *W*₆).

7. Dispositif d'antenne selon l'une des revendications précédentes, dans lequel le moyen d'émission (14) est conçu pour recevoir un signal de réponse (26) qui est envoyé par un dispositif transpondeur (74, 74') à la suite du signal radio (24) et dans lequel le moyen de calcul (47) est conçu pour déterminer, sur base d'une évaluation du signal de réponse (26) et de la caractéristique d'émission (25a à e) avec laquelle a été envoyé le signal radio (24), une présence du dispositif transpondeur (74, 74') dans une zone partielle d'une zone de détection du moyen d'émission (14), où la zone partielle est associée à la caractéristique d'émission (25a à e) et où le moyen de calcul (47) est par ailleurs conçu pour mettre à disposition à une sortie de signal (58) une information de position qui indique la présence du dispositif transpondeur (74, 74') dans la zone partielle.

8. Dispositif d'antenne selon la revendication 7, dans lequel le moyen de calcul (47) est conçu pour mettre à disposition une information de mouvement (76a à c) qui indique un mouvement (72) du dispositif transpondeur (74) de la zone partielle vers l'autre zone partielle lorsque la présence du dispositif transpondeur (74, 74') est déterminée d'abord dans la zone partielle et ensuite dans l'autre zone partielle.

9. Dispositif d'antenne selon la revendication 7 ou 8, dans lequel le moyen de calcul (47) comporte un lecteur d'identification par radio interne (54) destiné à évaluer le signal de réponse (26) et qui est conçu pour corréler la présence du dispositif transpondeur (74, 74') qui a envoyé le signal de réponse (26) à la suite signal radio (24) avec la zone partielle, dans lequel le moyen de calcul (50) est conçu pour commander la caractéristique d'émission (25a à e) du signal radio (24) de sorte que le signal radio (24) soit émis dans un intervalle de temps suivant avec une caractéristique d'émission (25a à e) qui est associée à une autre zone partielle.

10. Dispositif d'antenne selon la revendication 9, dans lequel le moyen de calcul (47) est conçu pour mettre à disposition les signaux d'alimentation (18a à c) de sorte que, dans un premier intervalle de temps, le signal radio (24) soit envoyé avec une première caractéristique d'émission (25a à e) et, dans un deuxième intervalle de temps suivant le premier intervalle de temps, avec une deuxième caractéristique d'émission (25a à e),
dans lequel le lecteur d'identification par radio interne (54) est conçu pour corréler un premier signal de réponse (26) avec une première zone partielle qui est associée à la première caractéristique d'émission (25a à e) et pour corréler un deuxième signal de réponse (26) avec une deuxième zone partielle associée à la deuxième caractéristique d'émission (25a à e),
dans lequel le moyen de calcul (47) est conçu pour mettre à disposition un signal de position (58; 76a à c) qui présente des informations sur une présence d'un dispositif transpondeur (74, 74') qui envoie le signal de réponse (26) dans la première zone partielle pendant le premier intervalle de temps et dans la deuxième zone partielle pendant le deuxième intervalle de temps.

11. Dispositif d'antenne selon la revendication 10,
dans lequel le dispositif de calcul (47) est conçu pour:
déterminer, dans le premier intervalle de temps, une présence d'au moins un dispositif transpondeur (74, 74') dans une première zone partielle d'une zone de détection du dispositif d'antenne (50) sur base du signal de réponse (26) et pour commander la caractéristique d'émission (25a à e) de sorte que le signal radio (24) soit envoyé au moins à une part de temps de 50% avec une première caractéristique d'émission (25a) associée à la première zone partielle et de sorte que le signal radio (24) soit émis au moins temporairement avec une caractéristique d'émission (25b) associée à une deuxième zone partielle de la zone de détection qui est disposée adjacente à la première zone partielle (25a) dans la zone de détection;
déterminer, dans un deuxième intervalle de temps qui suit le premier intervalle, une présence de l'au moins un dispositif transpondeur (74, 74') dans la deuxième zone partielle et pour commander la caractéristique d'émission de sorte que le signal radio soit envoyé à au moins une part de temps de 50% avec une deuxième caractéristique d'émission (25b) associée à la deuxième zone partielle et de sorte que le signal radio (24) soit émis au moins temporairement avec la première caractéristique d'émission (25a) associée à la première zone partielle lorsque le moyen de calcul (47) ne détermine pas la présence d'un dispositif transpondeur (74, 74') dans la première zone partielle;
dans lequel le moyen de calcul (47) est conçu pour mettre à disposition le signal de position (58; 76a à c) dans le premier et le deuxième intervalle de temps, de sorte que soit permise une direction de mouvement (72) de l'au moins un dispositif transpondeur (74, 74') dans la zone de réception sur base d'une séquence dans le temps (76a à c) des zones partielles dans lesquelles est déterminé le dispositif transpondeur (74, 74').

12. Dispositif d'antenne selon l'une des revendications précédentes, comportant par ailleurs une entrée de signal de commande (59) destinée à recevoir un signal de commande (62), dans lequel le moyen de calcul (47) est conçu pour déterminer, sur base du signal de commande (62), une séquence temporelle d'une modification de la caractéristique d'émission (25a à e) et pour modifier la caractéristique d'émission (25a à e) sur base de la séquence temporelle.

13. Système d'identification par radio (100) avec:
un dispositif d'antenne (50) selon l'une des revendications 9 à 12; et
un moyen de communication (94) destiné à recevoir un signal de données qui présente des informations relatives à une position d'un dispositif transpondeur (74, 74') détecté par le dispositif d'antenne (50).

14. Système d'identification par radio (90) avec:
un lecteur d'identification par radio externe (92);
un dispositif d'antenne (10; 20; 50) selon l'une des revendications 1 à 12; et
un moyen de communication (94) destiné à mettre à disposition un signal de commande qui présente des informations relatives à une séquence temporelle de la caractéristique d'émission avec laquelle est émis le signal radio.

15. Procédé aux étapes suivantes consistant à
obtenir un signal d'identification (16) d'un lecteur d'identification par radio externe (92) à une connexion (28);
émettre un signal radio (24) par un moyen d'émission (14) qui comporte une pluralité d'antennes (22a à c) qui comportent une caractéristique d'émission (25a à e);
générer une pluralité de signaux d'alimentation (18a à c; b₁ à b_{N}) sur base du signal d'identification (16) et appliquer les signaux d'alimentation (18a à c; b₁ à b_{N}) à la pluralité d'antennes (22a à c) pour générer le signal radio; et
commander de manière variable dans le temps les signaux d'alimentation (18a à c; b₁ à b_{N}), de sorte que le signal radio (24) soit émis avec une caractéristique d'émission variable dans le temps (25a à e).
